# EUROPEAN PATENT APPLICATION

(11) **EP 4 622 214 A1**
(43) Date of publication of application: **24.09.2025**
(21) Application number: 23895994.4
(22) Date of filing: 29.06.2023
(51) Int. Cl.: H04L 47/125

(54) **DATA TRANSMISSION METHOD, APPARATUS, DEVICE AND SYSTEM, AND STORAGE MEDIUM**

(30) Priority: 29.11.2022 CN 202211517066
(71) Applicant: Huawei Technologies Co., Ltd., Shenzhen, Guangdong 518129 (CN)
(72) Inventor: YAN, Siyu, Shenzhen, Guangdong 518129 (CN); YUAN, Hui, Shenzhen, Guangdong 518129 (CN); SONG, Hexiang, Shenzhen, Guangdong 518129 (CN); LIU, Ning, Shenzhen, Guangdong 518129 (CN); QU, Di, Shenzhen, Guangdong 518129 (CN); ZHENG, Xiaolong, Shenzhen, Guangdong 518129 (CN)
(74) Representative: Gill Jennings & Every LLP
(86) International application number: PCT/CN2023/103736
(87) International publication number: WO 2024/113830

(57) **Abstract**

This application discloses a data transmission method, apparatus, device, and system, and a storage medium, and relates to the field of communication technologies. An example in which a first communication apparatus performs the method is used. The first communication apparatus obtains a first packet corresponding to a first service, where a destination of the first packet is a second communication apparatus. The first communication apparatus sends the first packet to the second communication apparatus based on a first connection group, where the first connection group is shared by services transmitted by the first communication apparatus. According to the method, a same connection group can be shared and reused to transmit packets of services, to improve connection scalability, which frees, in comparison with a single-connection transmission manner, data transmission performance from limitation of resources such as a network adapter memory and limitation of service interruption caused by a single-connection fault, so that data transmission reliability is improved.

## Description

This application claims priority to Chinese Patent Application No. 202211517066.9, filed with the China National Intellectual Property Administration on November 29, 2022 and entitled "DATA TRANSMISSION METHOD, APPARATUS, DEVICE, AND SYSTEM, AND STORAGE MEDIUM", which is incorporated herein by reference in its entirety.

### TECHNICAL FIELD

This application relates to the field of communication technologies, and in particular, to a data transmission method, apparatus, device, and system, and a storage medium.

### BACKGROUND

With rapid deployment and application of high-performance services (such as high-performance computing, distributed machine learning, and distributed storage), remote direct memory access (remote direct memory access, RDMA), as a main network transmission technology for supporting the high-performance services, gradually becomes a mainstream network communication solution.

In a related technology, a single-connection mode is used for data transmission in the RDMA technology, that is, packets of a same service are carried on one queue pair (queue pair, QP) connection for transmission, and a QP connection corresponds to a path, that is, the QP connection is used to describe a communication connection of a service between any two nodes.

However, as a network scale continuously expands, a quantity of nodes in a network increases or a quantity of services between any two nodes increases. Therefore, in the data transmission method in the related technology, a large quantity of QP connections need to be established to implement data transmission, and a quantity of established QP connections is limited by resources such as a network adapter memory. Consequently, data transmission performance is limited.

### SUMMARY

This application provides a data transmission method, apparatus, device, and system, and a storage medium, to perform transmission of a packet of a service by using a shared connection group.

According to a first aspect, a data transmission method is provided. An example in which a first communication apparatus performs the method is used. The first communication apparatus obtains a first packet corresponding to a first service, where a destination of the first packet is a second communication apparatus. The first communication apparatus sends the first packet to the second communication apparatus based on a first connection group, where the first connection group is shared by services transmitted by the first communication apparatus.

According to the method, a same connection group can be shared and reused to transmit packets of services, to improve connection scalability, which frees, in comparison with a single-connection transmission manner, data transmission performance from limitation of resources such as a network adapter memory and limitation of service interruption caused by a single-connection fault, to improve data transmission reliability.

In a possible implementation, the first connection group includes a first connection between the first communication apparatus and the second communication apparatus. In this case, the first communication apparatus may send the first packet to the second communication apparatus based on the first connection in the first connection group. In addition, when the first communication apparatus obtains a second packet corresponding to a second service, and a destination of the second packet is the same as a destination of the first packet, and is the second communication apparatus, the first communication apparatus may further send the second packet to the second communication apparatus based on the first connection.

Therefore, for packets that are of different services but that are destined for a same destination, a same connection in a same connection group can be shared and reused, to implement single-connection sharing between a plurality of services, so that a quantity of local connections does not increase with services. Therefore, the data transmission performance is not limited by resources such as the network adapter memory, to further improve the connection scalability.

In a possible implementation, in addition to the first connection between the first communication apparatus and the second communication apparatus, the first connection group further includes a second connection between the first communication apparatus and the second communication apparatus. In this case, the first communication apparatus may send the first packet to the second communication apparatus based on the first connection in the first connection group. When the first communication apparatus obtains a second packet corresponding to the first service, and a destination of the second packet is the second communication apparatus, the first communication apparatus may send the second packet to the second communication apparatus based on the second connection.

Therefore, transmission of different packets that are of a same service and that are destined for a same destination can be performed through different connections in a same connection group, to implement multi-connection sharing of a single service. Therefore, a manner of performing transmission for a same service through the plurality of connections can further implement payload balancing between a plurality of connections, and can avoid a service interruption problem caused by the single-connection fault. When the first connection in the first connection group is faulty, switching to the second connection in the first connection group can be performed for transmission, to ensure reliability and stability of service transmission. In addition, when different connections correspond to different physical paths in a network, payload balancing between a plurality of paths in the network can be further implemented, and a service interruption problem caused by a single-path fault can be avoided, to further ensure the reliability and stability of service transmission.

In a possible implementation, the first connection group is used for being shared by services transmitted by the first communication apparatus to the second communication apparatus, and may also be used for being shared by services transmitted by the first communication apparatus to a fourth communication apparatus. The first communication apparatus obtains a third packet corresponding to the first service, where a destination of the third packet is the fourth communication apparatus. The first communication apparatus sends the third packet to the fourth communication apparatus based on the first connection group. Therefore, the first communication apparatus can further send packets of a same service to the second communication apparatus and the fourth communication apparatus by using the shared first connection group, to further improve the connection scalability and the data transmission performance.

In a possible implementation, the first communication apparatus obtains a third packet corresponding to the second service, where a destination of the third packet is the fourth communication apparatus. The first communication apparatus sends the third packet to the fourth communication apparatus based on the first connection group. Therefore, the first communication apparatus can further send packets of different services to the second communication apparatus and the fourth communication apparatus by using the shared first connection group, to further improve the connection scalability and the data transmission performance.

In a possible implementation, the first communication apparatus may send the first packet to the second communication apparatus based on the first connection in the following manner: selecting the first connection in the first connection group based on that connection performance of the first connection meets a performance condition, to send the first packet to the second communication apparatus. The connection performance includes at least one of a send queue length, latency performance, or packet loss performance. A connection whose connection performance meets the performance condition is a connection with high connection performance in a connection group. Therefore, when the first connection group includes a plurality of connections, the first connection is selected depending on whether the performance condition is met, so that transmission performance of data transmission performed through the first connection is higher.

In a possible implementation, the first communication apparatus includes a connection resource pool, the connection resource pool includes at least one connection group, each connection group corresponds to one destination communication apparatus, and the at least one connection group includes the first connection group. In a manner of establishing the connection resource pool, connection sharing and reusing can be better implemented.

In a possible implementation, before sending the first packet to the second communication apparatus based on the first connection group, the first communication apparatus needs to first determine the first connection group based on the first packet. For example, when a destination communication apparatus respectively corresponding to the at least one connection group includes the destination of the first packet, a connection group corresponding to the destination is used as the first connection group; or when a destination communication apparatus respectively corresponding to the at least one connection group does not include the destination of the first packet, the first connection group is established, so that transmission of the first packet can be performed based on the first connection group. Therefore, when the connection resource pool already includes the corresponding connection group, a connection group corresponding to a destination of a to-be-transmitted packet can be quickly determined based on the connection resource pool. Because a connection does not need to be established currently, a data transmission speed is further improved.

In a possible implementation, before the first connection is determined, connection performance of each connection in the first connection group further needs to be obtained. Optionally, a detection packet is sent based on any connection in the first connection group; and at least one of latency performance or packet loss performance of the any connection is obtained by using the detection packet. In a manner of sending the detection packet, connection performance of each connection may be obtained in real time, to ensure accuracy of the connection performance, and further ensure accuracy of the first connection selected based on the connection performance, so that a packet whose transmission is performed through the first connection has high transmission performance.

In a possible implementation, when the first packet is an important packet, the first communication apparatus may add a first identifier to the first packet. The important packet is a packet whose packet loss has great impact on the data transmission performance. For example, the important packet may be the last packet, a control signaling packet, a detection packet, a heartbeat keep-alive packet, an address request packet, a packet loss retransmission packet, or a service-specified important packet in a send queue respectively corresponding to at least one connection. The first identifier is used by a communication apparatus that receives the first packet to determine, based on the first identifier, that the first packet is an important packet.

The first identifier is added to the important packet, so that the second communication apparatus that receives the first packet can determine, based on the first identifier, that the first packet is an important packet, and the second communication apparatus can perform protection processing on the important packet, to ensure transmission performance of the important packet, reduce a packet loss rate of the important packet, and effectively avoid a tail latency problem caused by the packet loss of the important packet.

In a possible implementation, when a data amount of the first packet is greater than a threshold, the first communication apparatus may further split the first packet into a plurality of first sub-packets, and send the plurality of first sub-packets to the second communication apparatus based on the first connection group. In a data splitting manner, the first packet whose data amount is greater than the threshold is split into the plurality of first sub-packets for transmission, so that fine-grained multi-connection scheduling can be implemented more easily, to improve the data transmission performance.

In a possible implementation, the first packet may be split into the plurality of first sub-packets in the following manner: splitting the first packet into the plurality of first sub-packets based on a memory address range corresponding to the first packet, where one first sub-packet corresponds to one memory address interval in the memory address range. Data is split in a starting address offset manner, and split data does not need to be copied and pasted, to reduce memory occupation and occupation of a computing resource of a central processing unit (central processing unit, CPU), and improve data splitting efficiency.

In a possible implementation, the first communication apparatus includes an application layer and a transport layer. The first communication apparatus may obtain, in the following manner, the first packet corresponding to the first service: The transport layer receives the first packet that corresponds to the first service and that is sent by the application layer by invoking a logical interface of the first service. Similarly, after the first communication apparatus sends the plurality of first sub-packets to the second communication apparatus based on the first connection group, when the transport layer obtains notification messages respectively corresponding to the plurality of first sub-packets, the transport layer invokes the logical interface of the first service to send a notification message corresponding to the first packet to the application layer.

Therefore, when the first packet is split into the plurality of first sub-packets for transmission, the application layer still transmits the first packet to the transport layer, and receives the notification message that corresponds to the first packet and that is sent by the transport layer. The method can be implemented by directly using an existing logical interface of an upper-layer application, without modifying original service code or establishing a new interface. In other words, the multi-connection sharing is transparent to the application layer, so that the method has wider deployability and adaptability.

In a possible implementation, the first communication apparatus is middleware between application layer software and network adapter hardware.

In a possible implementation, the first packet is transmitted according to an RDMA protocol. In this way, the method can improve data transmission performance in an RDMA technology.

According to a second aspect, a data transmission method is provided, and is applied to a third communication apparatus. The third communication apparatus receives a first packet that corresponds to a first service and that is sent by a first communication apparatus based on a first connection group, where a destination of the first packet is a second communication apparatus, and the first connection group is shared by services transmitted by the first communication apparatus. The third communication apparatus sends the first packet to the second communication apparatus.

According to the method, a same connection group is shared and reused to receive a packet, to ensure effective implementation of connection sharing and reusing, improve connection scalability of the first communication apparatus, and improve data transmission performance and reliability.

In a possible implementation, the first connection group includes a first connection between the first communication apparatus and the second communication apparatus, and the third communication apparatus receives the first packet that corresponds to the first service and that is sent by the first communication apparatus based on the first connection in the first connection group. The third communication apparatus may further receive a second packet that corresponds to a second service and that is sent by the first communication apparatus based on the first connection, where a destination of the second packet is the second communication apparatus. The third communication apparatus sends the second packet to the second communication apparatus.

In a possible implementation, the first connection group includes a first connection and a second connection between the first communication apparatus and the second communication apparatus, and the third communication apparatus receives the first packet that corresponds to the first service and that is sent by the first communication apparatus based on the first connection in the first connection group. The third communication apparatus may further receive a second packet that corresponds to the first service and that is sent by the first communication apparatus based on the second connection, where a destination of the second packet is the second communication apparatus. The third communication apparatus sends the second packet to the second communication apparatus.

In a possible implementation, after the third communication apparatus receives the first packet that is of the first service and that is sent by the first communication apparatus, when the first packet is an important packet, the third communication apparatus processes the first packet based on a first packet loss rate. The first packet loss rate is less than a packet loss rate of an unimportant packet. The important packet is the last packet, a control signaling packet, a heartbeat keep-alive packet, a detection packet, an address request packet, a packet loss retransmission packet, or a service-specified important packet in a send queue respectively corresponding to at least one connection.

In a possible implementation, the first packet carries a first mark, and the first mark is added by the first communication apparatus. Before the first packet is processed based on the first packet loss rate, it may be determined, based on the first mark, that the first packet is an important packet.

In a possible implementation, the third communication apparatus receives a detection packet that is sent by the first communication apparatus based on any connection in the first connection group, and adds transmission information to the detection packet, where the transmission information includes at least one of a node identifier, a packet loss, a latency, or a throughput; and transmits the detection packet to which the transmission information is added, where the detection packet is used by the first communication apparatus to obtain at least one of latency performance or packet loss performance of any connection.

In a possible implementation, a data amount of the first packet is greater than a threshold, the first packet includes a plurality of first sub-packets, and the plurality of first sub-packets are obtained by the first communication apparatus by splitting the first packet. In this case, when the plurality of first sub-packets are out of order, an out-of-order identifier is added to an out-of-order first sub-packet in the plurality of first sub-packets, and the first sub-packet to which the out-of-order identifier is added is transmitted. The out-of-order identifier indicates that the plurality of first sub-packets are out of order but no packet is lost.

In a possible implementation, the first packet is transmitted according to an RDMA protocol.

According to a third aspect, a data transmission method is provided, and is applied to a second communication apparatus. The second communication apparatus receives a first packet corresponding to a first service, where the first packet is sent by a first communication apparatus based on a first connection group, a destination of the first packet is the second communication apparatus, and the first connection group is shared by services transmitted by the first communication apparatus.

According to the method, a same connection group is shared and reused to receive a packet, to ensure effective implementation of connection sharing and reusing, improve connection scalability of the first communication apparatus, and improve data transmission performance and reliability.

In a possible implementation, if the first connection group includes a first connection between the first communication apparatus and the second communication apparatus, the first packet may be sent by the first communication apparatus based on the first connection. The second communication apparatus may further receive a second packet corresponding to a second service, where the second packet is sent by the first communication apparatus based on the first connection, and a destination of the second packet is the second communication apparatus.

In a possible implementation, if the first connection group includes a first connection and a second connection between the first communication apparatus and the second communication apparatus, the first packet may be sent by the first communication apparatus based on the first connection. The second communication apparatus may further receive a second packet corresponding to the first service, where the second packet is sent by the first communication apparatus based on the second connection, and a destination of the second packet is the second communication apparatus.

In a possible implementation, the first packet includes a plurality of first sub-packets, and the second communication apparatus includes an application layer and a transport layer. The second communication apparatus may receive, in the following manner, the first packet corresponding to the first service: The transport layer receives the plurality of first sub-packets that are sent by the first communication apparatus based on the first connection group. The plurality of first sub-packets respectively include corresponding sequence numbers, sub-sequence numbers, and interface identifiers, and the plurality of first sub-packets are obtained by the first communication apparatus by splitting the first packet. The transport layer arranges and combines the plurality of first sub-packets based on the sequence numbers and the sub-sequence numbers to obtain the first packet. The transport layer invokes a logical interface corresponding to the interface identifier to send the first packet to the application layer.

When the first packet is split into the plurality of first sub-packets for multi-connection sharing transmission, the application layer still receives the first packet sent by the transport layer. Therefore, the application layer is unaware of data splitting and a multi-connection sharing process.

In a possible implementation, when any out-of-order first sub-packet is received, if the any first sub-packet carries an out-of-order identifier, it is determined, based on the out-of-order identifier, that the plurality of first sub-packets are out of order but no packet is lost. An out-of-order packet and a packet in which a packet loss occurs can be accurately distinguished by recognizing the out-of-order identifier, to avoid the following case: The out-of-order packet is mistakenly considered as the packet in which the packet loss occurs, and consequently, packet loss transmission is triggered when no packet is lost.

In a possible implementation, the first communication apparatus is middleware between application layer software and network adapter hardware.

In a possible implementation, the first packet is transmitted according to an RDMA protocol. In this way, the method can improve data transmission performance in an RDMA technology.

According to a fourth aspect, a data transmission apparatus is provided, and is used in a first communication apparatus. The apparatus includes the following.

An obtaining module is configured to obtain a first packet corresponding to a first service, where a destination of the first packet is a second communication apparatus.

A sending module is configured to send the first packet to the second communication apparatus based on a first connection group, where the first connection group is shared by services transmitted by the first communication apparatus.

In a possible implementation, the first connection group includes a first connection between the first communication apparatus and the second communication apparatus, and the sending module is configured to send the first packet to the second communication apparatus based on the first connection.

The obtaining module is further configured to obtain a second packet corresponding to a second service, where a destination of the second packet is the second communication apparatus.

The sending module is further configured to send the second packet to the second communication apparatus based on the first connection.

In a possible implementation, the first connection group includes a first connection between the first communication apparatus and the second communication apparatus, and the sending module is configured to send the first packet to the second communication apparatus based on the first connection.

The obtaining module is further configured to obtain a second packet corresponding to the first service, where a destination of the second packet is the second communication apparatus.

The sending module is further configured to send the second packet to the second communication apparatus based on the second connection.

In a possible implementation, the sending module is configured to select, based on that connection performance of the first connection meets a performance condition, the first connection to send the first packet to the second communication apparatus. The connection performance includes at least one of a send queue length, latency performance, or packet loss performance.

In a possible implementation, the first communication apparatus includes a connection resource pool, the connection resource pool includes at least one connection group, each connection group corresponds to one destination communication apparatus, and the at least one connection group includes the first connection group.

In a possible implementation, the apparatus further includes the following.

A splitting module is configured to: when a data amount of the first packet is greater than a threshold, split, by the first communication apparatus, the first packet into a plurality of first sub-packets.

A sending module is configured to send the plurality of first sub-packets to the second communication apparatus based on the first connection group.

In a possible implementation, the first communication apparatus includes an application layer and a transport layer. The obtaining module is configured to receive, by the transport layer, the first packet that corresponds to the first service and that is sent by the application layer by invoking a logical interface of the first service.

The sending module is configured to: when the transport layer obtains notification messages respectively corresponding to the plurality of first sub-packets, invoke, by the transport layer, the logical interface of the first service to send a notification message corresponding to the first packet to the application layer.

In a possible implementation, the first communication apparatus is middleware between application layer software and network adapter hardware.

In a possible implementation, the first packet is transmitted according to an RDMA protocol.

According to a fifth aspect, a data transmission apparatus is provided, and is used in a third communication apparatus. The apparatus includes the following.

A receiving module is configured to receive a first packet that corresponds to a first service and that is sent by a first communication apparatus based on a first connection group, where a destination of the first packet is a second communication apparatus, and the first connection group is shared by services transmitted by the first communication apparatus.

A sending module is configured to send the first packet to the second communication apparatus.

In a possible implementation, the first connection group includes a first connection between the first communication apparatus and the second communication apparatus, and the receiving module is configured to receive the first packet that corresponds to the first service and that is sent by the first communication apparatus based on the first connection.

The receiving module is further configured to receive a second packet that corresponds to a second service and that is sent by the first communication apparatus based on the first connection, where a destination of the second packet is the second communication apparatus.

The sending module is further configured to send the second packet to the second communication apparatus.

In a possible implementation, the first connection group includes a first connection and a second connection between the first communication apparatus and the second communication apparatus, and the receiving module is configured to receive the first packet that corresponds to the first service and that is sent by the first communication apparatus based on the first connection.

The receiving module is further configured to receive a second packet that corresponds to the first service and that is sent by the first communication apparatus based on the second connection, where a destination of the second packet is the second communication apparatus.

The sending module is further configured to send the second packet to the second communication apparatus.

In a possible implementation, the first packet includes a plurality of first sub-packets, and the apparatus further includes: an adding module, configured to: when the plurality of first sub-packets are out of order, add an out-of-order identifier to an out-of-order first sub-packet in the plurality of first sub-packets; and
a transmission module, configured to transmit the first sub-packet to which the out-of-order identifier is added, where the out-of-order identifier indicates that the plurality of first sub-packets are out of order but no packet is lost.

In a possible implementation, the first packet is transmitted according to an RDMA protocol.

According to a sixth aspect, a data transmission apparatus is provided, and is used in a second communication apparatus. The apparatus includes the following.

A receiving module is configured to receive a first packet corresponding to a first service, where the first packet is sent by a first communication apparatus based on a first connection group, a destination of the first packet is the second communication apparatus, and the first connection group is shared by service transmitted by the first communication apparatus.

In a possible implementation, the first connection group includes a first connection between the first communication apparatus and the second communication apparatus, and the first packet is sent by the first communication apparatus based on the first connection.

The receiving module is further configured to receive a second packet corresponding to a second service, where the second packet is sent by the first communication apparatus based on the first connection, and a destination of the second packet is the second communication apparatus.

In a possible implementation, the first connection group includes a first connection and a second connection between the first communication apparatus and the second communication apparatus, and the first packet is sent by the first communication apparatus based on the first connection.

The receiving module is further configured to receive a second packet corresponding to the first service, where the second packet is sent by the first communication apparatus based on the second connection, and a destination of the second packet is the second communication apparatus.

In a possible implementation, the first packet includes a plurality of first sub-packets, and the second communication apparatus includes an application layer and a transport layer.

The receiving module is configured to: receive, by the transport layer, the plurality of first sub-packets, where the plurality of first sub-packets respectively include corresponding sequence numbers, sub-sequence numbers, and interface identifiers, and the plurality of first sub-packets are obtained by the first communication apparatus by splitting the first packet; arrange and combine, by the transport layer, the plurality of first sub-packets based on the sequence numbers and the sub-sequence numbers to obtain the first packet; and invoke, by the transport layer, a logical interface corresponding to the interface identifier to send the first packet to the application layer.

In a possible implementation, the apparatus further includes the following.

A determining module is configured to: when any out-of-order first sub-packet is received, if the any first sub-packet carries an out-of-order identifier, determine, based on the out-of-order identifier, that the plurality of first sub-packets are out of order but no packet is lost.

In a possible implementation, the second communication apparatus is middleware between application layer software and network adapter hardware.

In a possible implementation, the first packet is transmitted according to an RDMA protocol.

According to a seventh aspect, a data transmission device is provided. The data transmission device includes a processor. The processor is coupled to a memory, the memory stores at least one program instruction or code, and the at least one program instruction or code is loaded and executed by the processor, to enable the data transmission device to implement the data transmission method according to any one of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to an eighth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the communication apparatus is enabled to perform the method according to any one of the first aspect or the possible implementations of the first aspect, perform the method according to any one of the second aspect or the possible implementations of the second aspect, or perform the method according to any one of the third aspect or the possible implementations of the third aspect.

According to a ninth aspect, a data transmission system is provided. The data transmission system includes a first communication apparatus and a second communication apparatus.

The first communication apparatus is configured to perform the method according to any one of the first aspect or the possible implementations of the first aspect, and the second communication apparatus is configured to perform the method according to any one of the third aspect or the possible implementations of the third aspect.

Optionally, the data transmission system further includes a third communication apparatus. The third communication apparatus is configured to perform the method according to any one of the second aspect or the possible implementations of the second aspect.

According to a tenth aspect, a computer-readable storage medium is provided. The storage medium stores at least one instruction, and the instruction is loaded and executed by a processor, to enable a computer to implement the method according to any one of the first aspect or the possible implementations of the first aspect, implement the method according to any one of the second aspect or the possible implementations of the second aspect, or implement the method according to any one of the third aspect or the possible implementations of the third aspect.

According to an eleventh aspect, a computer program (product) is provided. The computer program (product) includes computer program code, and when the computer program code is run by a computer, the computer is enabled to perform the method in the foregoing aspects.

According to a twelfth aspect, a chip is provided, including a processor. The processor is configured to invoke, from a memory, instructions stored in a memory and run the instructions, to enable a communication device on which the chip is installed to perform the method in the foregoing aspects.

According to a thirteenth aspect, another chip is provided, including an input interface, an output interface, a processor, and a memory. The input interface, the output interface, the processor, and the memory are connected through an internal connection path. The processor is configured to execute code in the memory. When the code is executed, the processor is configured to perform the method in the foregoing aspects.

It should be understood that, for beneficial effects achieved by the technical solutions in the second aspect to the thirteenth aspect and the corresponding possible implementations of this application, refer to the technical effects of the first aspect and the corresponding possible implementations of the first aspect. Details are not described herein again.

### BRIEF DESCRIPTION OF DRAWINGS

FIG. 1 is a diagram of data transmission according to an embodiment of this application;
FIG. 2 is a diagram of an implementation environment of a data transmission method according to an embodiment of this application;
FIG. 3 is a diagram of interaction of a data transmission method according to an embodiment of this application;
FIG. 4 is a diagram of a connection between a connection resource pool and a logical interface according to an embodiment of this application;
FIG. 5 is a diagram of functional modules of a communication apparatus according to an embodiment of this application;
FIG. 6 is a diagram of functional modules of another communication apparatus according to an embodiment of this application;
FIG. 7 is a diagram of a structure of a data transmission apparatus according to an embodiment of this application;
FIG. 8 is a diagram of a structure of another data transmission apparatus according to an embodiment of this application;
FIG. 9 is a diagram of a structure of still another data transmission apparatus according to an embodiment of this application;
FIG. 10 is a diagram of a structure of a network device according to an embodiment of this application;
FIG. 11 is a diagram of a structure of another network device according to an embodiment of this application; and
FIG. 12 is a diagram of a structure of a server according to an embodiment of this application.

### DESCRIPTION OF EMBODIMENTS

To make objectives, technical solutions, and advantages of this application clearer, the following further describes implementations of this application in detail with reference to the accompanying drawings.

In a related technology, data transmission in an RDMA technology is performed in a single-connection mode, to be specific, a packet of one service is carried on one connection pair and sent. A connection pair may be a QP connection, and a QP connection includes a send queue (send queue, SQ), a receive queue (receive queue, RQ), and a completion queue (completion queue, CQ). Packets of a service have a same 5-tuple. The 5-tuple includes a source internet protocol (internet protocol, IP), a destination IP, a protocol number, a source port number, and a destination port number. Therefore, on a communication apparatus with an equal-cost multi-path routing (equal-cost multi-path routing, ECMP) function enabled, transmission of packets on a same QP connection is performed through a same physical path. ECMP is a routing algorithm that performs hash routing based on a 5-tuple.

However, as a network scale continuously expands, a quantity of nodes in a network increases or a quantity of services between any two nodes increases. Therefore, in the data transmission method in the related technology, a large quantity of QP connections need to be established to implement data transmission. However, a quantity of established QP connections is limited by resources such as a network adapter memory, and consequently, data transmission performance is limited. In addition, the single-connection mode is further limited by a risk of service interruption caused by a single-connection fault, to reduce the data transmission performance and reliability. In addition, when a plurality of equal-cost paths exist between any two nodes, the single-connection mode further has low utilization of network bandwidth of the plurality of equal-cost paths.

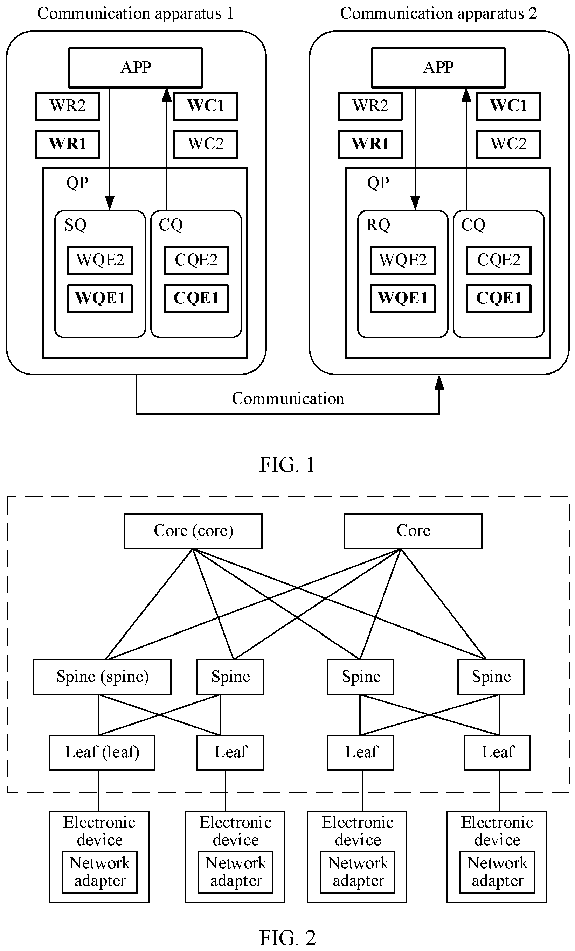

FIG. 1 is a diagram of data transmission according to an embodiment of this application. As shown in FIG. 1, a communication apparatus 1 serves as a sending node and mainly includes an SQ and a CQ, and a communication apparatus 2 serves as a receiving node and mainly includes an RQ and a CQ. The communication apparatus 1 and the communication apparatus 2 communicate with each other through at least one communication apparatus, or the communication apparatus 1 and the communication apparatus 2 are directly connected. An upper-layer service application (application, APP) submits a data sending task and a data receiving task in a work request (work request, WR) manner, and converts the data sending task and the data receiving task into a work queue element (work queue element, WQE) in the SQ or the RQ. When sending or reception of a packet is completed, a completion queue element (completion queue element, CQE) is correspondingly generated in the CQ. A CQE is correspondingly converted into a work completion (work completion, WC) task and is submitted to the service APP.

Optionally, a transmission interface in an RDMA technology includes a reliable connection (reliable connection, RC) mode and a dynamically connected (dynamically connected, DC) transmission mode. The RC mode has features such as a connection-oriented feature, a feature of ensuring reliability of retransmission of a lost packet, and a feature of supporting a unilateral or bilateral operation. FIG. 1 shows an example of data transmission in the bilateral operation in the RC mode. A difference between data transmission in the unilateral operation in the RC mode and the data transmission shown in FIG. 1 lies in that a receiving node does not need to generate a WR or a WC. For the data transmission in the RC mode, because one QP of a local node establishes a single connection to one QP of a remote node, and communicates with the QP of the remote node, as a scale of nodes or services on the local node increases, a quantity of network adapter connections on the local node also increases. For example, if a network includes N (N is a positive integer) nodes, and each node includes P (P is a positive integer) service processes, in a fully connected network scenario, each node needs to create N*P*P QP connections. If resources such as a network adapter memory of the local node are exhausted, data transmission performance is prone to deterioration.

For data transmission in the DC mode, when the local node needs to communicate with a plurality of remote nodes, the local node can share one QP connection with the plurality of remote nodes, and cyclically establish connections to different remote nodes to perform data transmission. Therefore, a network adapter connection scale of the local node does not increase rapidly with a quantity of nodes, to reduce a problem of an increase of a network adapter connection scale caused by expansion of a network scale. However, because a connection needs to be repeatedly disconnected and established to switch between different remote nodes of the same QP connection, and overheads of each time of disconnection and establishment of the connection are high, a data transmission latency and a throughput are deteriorated seriously.

FIG. 2 is a diagram of an implementation environment of a data transmission method according to an embodiment of this application. As shown in FIG. 2, the implementation environment includes a plurality of electronic devices and a plurality of switches. The plurality of switches include a leaf (leaf) switch, a spine (spine) switch, and a core (core) switch. The electronic device may be a terminal or a server, and mainly carries high-performance services having different communication requirements. A same electronic device may carry different services, and a mutual communication requirement exists between services of different electronic devices. The electronic device includes a network adapter, and the network adapter is configured to send data and receive data, to implement communication between different electronic devices.

In actual deployment, quantities of electronic devices, leaf switches, spine switches, and core switches may be flexibly adjusted based on factors such as a network scale. It may be understood that, as the network scale continuously expands, the quantities of electronic devices, leaf switches, spine switches, and core switches increase, and a plurality of equal-cost paths may exist between any two electronic devices. Therefore, in this case, because a plurality of paths cannot be simultaneously used in an RDMA single-connection mode, network bandwidth cannot be fully used, service performance is limited, and problems such as unbalanced network payload of the plurality of paths and high link reestablishment overheads in a case of a single point fault tend to occur. Even if a plurality of equal-cost paths between any two electronic devices do not exist, in other words, when a plurality of connections correspond to a same physical path, because some network faults are for connections, a service in the RDMA single-connection mode is interrupted due to a single-connection network fault, and data transmission reliability is also poor.

Based on this, an embodiment of this application provides a data transmission method. A standard interface such as an RC interface or a DC interface in current RDMA is used to resolve problems of connection scalability, link balancing, and the like through connection sharing and reusing. Optionally, the method may be applied to a data center network topology, interconnection between a plurality of data centers, or a wide area internet. A service scenario of the method may be a high-performance service scenario such as distributed machine learning training, distributed storage, artificial intelligence (artificial intelligence, AI), high performance computing (high performance computing, HPC), or a container. The RDMA in this embodiment of this application may be infinite bandwidth (infiniband) or RDMA over converged Ethernet (RDMA over converged Ethernet, RoCE).

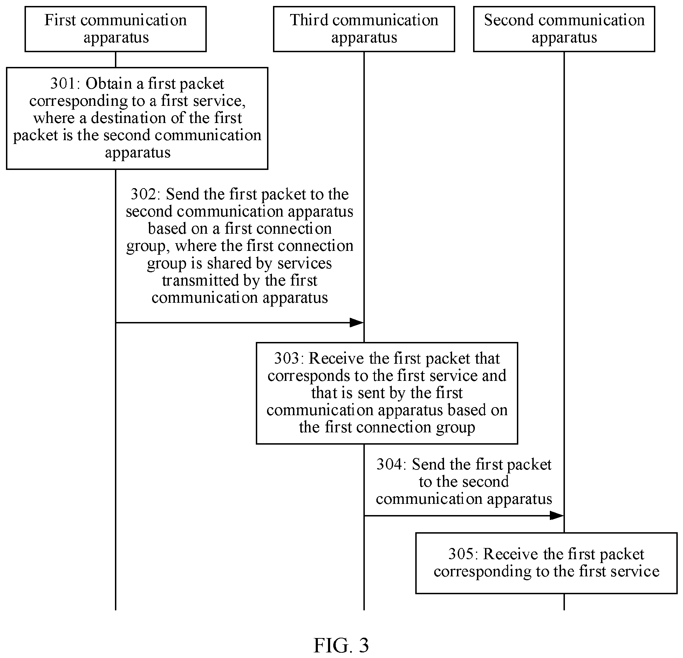

FIG. 3 is a diagram of interaction of a data transmission method according to an embodiment of this application. For example, an example in which a first communication apparatus transmits data to a second communication apparatus is used for description. The first communication apparatus and the second communication apparatus may be any two electronic devices shown in FIG. 2, or the first communication apparatus and the second communication apparatus may be middleware between application layer software and network adapter hardware. When the first communication apparatus transmits data to the second communication apparatus through a third communication apparatus, the third communication apparatus may be any leaf switch, spine switch, or core switch shown in FIG. 2. As shown in FIG. 3, the data transmission method includes the following step 301 to step 305.

Step 301: The first communication apparatus obtains a first packet corresponding to a first service, where a destination of the first packet is the second communication apparatus.

In this embodiment of this application, a plurality of upper-layer applications are run in the first communication apparatus, each upper-layer application corresponds to at least one service process, each service process corresponds to at least one service thread, and each service thread needs to communicate with a corresponding remote node. The first service in this embodiment of this application may be any service thread run in the first communication apparatus. When the first communication apparatus transmits data to the second communication apparatus, the first communication apparatus is referred to as a local node, the second communication apparatus is referred to as a remote node, a destination, or a destination communication apparatus, and a node between the first communication apparatus and the second communication apparatus is referred to as the third communication apparatus.

In a possible implementation, the first communication apparatus includes an application layer and a transport layer, the application layer and the transport layer interact with each other, at least one application is run at the application layer, one application includes at least one service, and the transport layer is configured to: send data from an upper layer, or receive data destined for the upper-layer application. For example, when data transmission needs to be performed for the first service at the application layer, the application layer invokes a logical interface of the first service to send the first packet corresponding to the first service to the transport layer, so that the first communication apparatus can obtain the to-be-transmitted first packet. In other words, the transport layer receives the first packet that corresponds to the first service and that is sent by the application layer by invoking the logical interface of the first service. Similarly, when a notification message of the first packet is obtained through the transport layer, the logical interface of the first service is invoked through the transport layer to send the notification message corresponding to the first packet to the application layer. Optionally, the notification message may be a sending completion message (for example, the CQE shown in FIG. 1), a packet loss notification message, an out-of-order notification message, or the like.

For example, the first packet is WR data. The APP shown in FIG. 1 indicates the application layer of the first communication apparatus, and the QP shown in FIG. 1 indicates the transport layer of the first communication apparatus. The first communication apparatus invokes a corresponding logical interface by using the APP, submits a data sending task to a send queue SQ at the transport layer in a WR manner, and sends data to the second communication apparatus by using the send queue SQ at the transport layer through an established QP connection. After the first communication apparatus sends the first packet, a receive queue CQ at the transport layer generates a CQE corresponding to the first packet, and the transport layer invokes a corresponding logical interface to submit the CQE to the APP in a WC manner.

Step 302: The first communication apparatus sends the first packet to the second communication apparatus based on a first connection group, where the first connection group is shared by services transmitted by the first communication apparatus.

In this embodiment of this application, the method may be applied to an RDMA transmission technology scenario, and transmission of the first packet may be performed based on an RDMA protocol. In this way, the method can improve data transmission performance in an RDMA technology.

The first communication apparatus includes a connection resource pool, the connection resource pool includes at least one connection group, one connection group corresponds to one destination communication apparatus, and the at least one connection group includes the first connection group. Before sending the first packet based on the first connection group, the first communication apparatus needs to first determine the first connection group in the connection resource pool based on a destination of the first packet. Optionally, when a destination communication apparatus respectively corresponding to the at least one connection group includes the destination of the first packet, a connection group corresponding to the destination is used as the first connection group; or when a destination communication apparatus respectively corresponding to the at least one connection group does not include the destination of the first packet, the first connection group is established, so that the transmission of the first packet can be performed based on the first connection group. Therefore, when the connection resource pool already includes the corresponding connection group, a connection group corresponding to a destination of a to-be-transmitted packet can be quickly determined based on the connection resource pool. Because a connection does not need to be established currently, a data transmission speed is further improved. The at least one connection group included in the connection resource pool is all connection groups included in the connection resource pool.

A manner of establishing the first connection group is not limited in this embodiment of this application. For example, the first communication apparatus initiates a request (request, REQ) message for establishing a QP connection, and the REQ message carries a connection parameter, for example, a sequence number of the QP connection, a start packet sequence number (packet sequence number, PSN), an upper limit of a quantity of retransmission times, and a source port number. After detecting, through listening, the connection request sent by the first communication apparatus, the second communication apparatus checks and records the connection parameter in the REQ message. For example, a check manner is determining whether the connection parameter in the REQ message is consistent with a connection parameter of the second communication apparatus. After the check succeeds, a reply (reply, REP) message is sent, to indicate that the connection request sent by the first communication apparatus is accepted, and the connection parameter of the second communication apparatus is included in the REP message. After receiving the REP message returned by the second communication apparatus, the first communication apparatus checks and records the connection parameter in the REP message, and then sends a ready to use (ready to use, RTU) message to indicate agreement with the connection parameter of the first communication apparatus. In this way, establishment of a QP connection between the first communication apparatus and the second communication apparatus is completed, and data transmission can be performed through the QP connection. Further, a plurality of QP connections between the first communication apparatus and the second communication apparatus can be established by using different connection parameters, for example, different source port numbers.

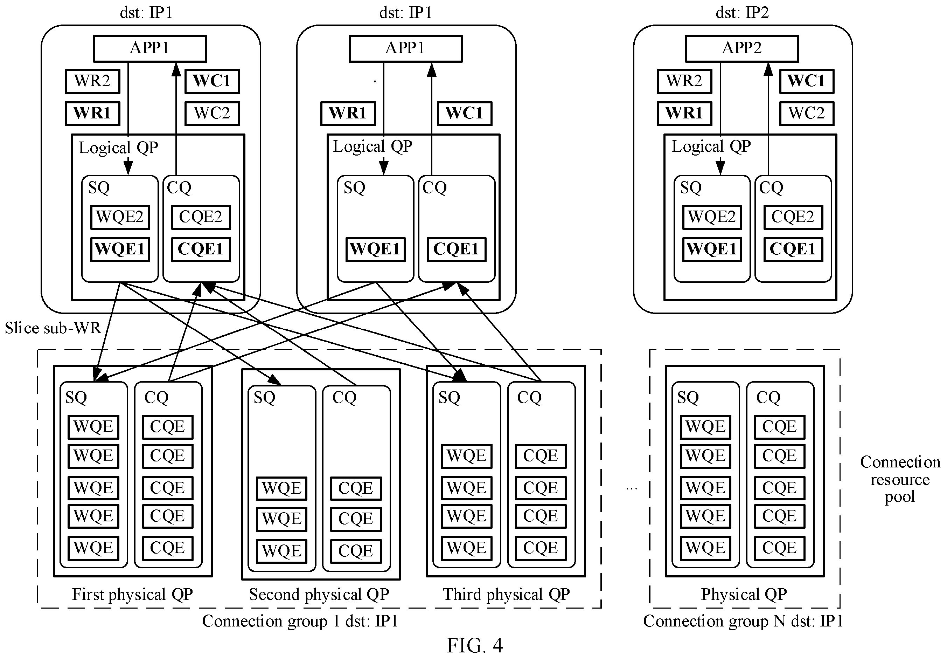

FIG. 4 is a diagram of a connection between a connection resource pool and a logical interface according to an embodiment of this application. As shown in FIG. 4, one connection group corresponds to one destination address dst: IP1 of a destination communication apparatus. Because different physical QP connections in a same connection group include different source ports, a second communication apparatus can perform ECMP for the different physical QP connections based on the different source ports to obtain different physical paths or a same physical path. Therefore, the different physical QP connections correspond to a same physical path or different physical paths to a destination.

It can be learned from FIG. 4 that a service application may include a service 1 of an APP1, a service 2 of the APP1, and a service 1 of an APP2. A QP connection established for any service is a logical QP connection, and the logical QP connection established for the any service is mapped to a physical QP connection actually established in the connection resource pool. Therefore, for the application service, WR data may be directly sent through an original logical interface, and then the WR data is mapped to a plurality of physical QP connections based on mapping between the logical QP connection and the physical QP connection. Therefore, it is ensured that original service code does not need to be modified. In other words, the connection resource pool is transparent to an upper-layer service, so that the connection resource pool has wider deployability and adaptability, and can be compatible with a plurality of RDMA protocols.

After the first connection group is determined from the connection resource pool, the first packet may be sent based on a first connection included in the first connection group. Optionally, the first connection is selected from connections included in the first connection group, and the first packet is sent to the second communication apparatus through the first connection. Connection performance of the first connection meets a performance condition, and the connection performance includes at least one of a send queue length, latency performance, or packet loss performance.

For example, when the connection performance includes the send queue length, the performance condition may be that the send queue length is the shortest; and when the connection performance includes the latency performance or the packet loss performance, the performance condition may be that a latency is the smallest or that a packet loss rate is the smallest. In addition, the first connection may alternatively be selected from the connections in the first connection group by using a round-robin scheduling (round-robin scheduling, RR) algorithm. The RR algorithm can perform a same non-differentiated round-robin scheduling service on the connections in the first connection group.

In a possible implementation, before the first connection is selected from the first connection group, connection performance of each connection included in the first connection group further needs to be obtained. Optionally, a detection packet is sent based on any connection in the first connection group; and at least one of latency performance or packet loss performance of the any connection is obtained by using the detection packet. A 5-tuple of the detection packet is the same as a 5-tuple corresponding to the any connection. For example, the detection packet may be a packet whose transmission is performed based on the any connection, or may be a detection packet specially sent for obtaining the connection performance. Optionally, the detection packet may be periodically sent based on the any connection, to obtain actual connection performance corresponding to the any connection in real time. Alternatively, when there is a measurement requirement for the any connection, the detection packet may be sent based on the any connection, to detect the connection performance in a targeted manner, so that communication pressure is reduced.

In a possible implementation, when a data amount of the first packet is greater than a threshold, the first packet may be split into a plurality of first sub-packets. Optionally, the threshold may be a maximum transmission unit (maximum transmission unit, MTU), and the MTU refers to a maximum data amount that can be carried in an Ethernet frame (Ethernet frame). Further, the first packet may be split by using a granularity of the threshold MTU. For example, when the data amount of the first packet is 8000 bytes and the MTU is 4000 bytes, the first packet may be split into two 4000-byte first sub-packets. A manner of splitting the first packet is not limited in this embodiment of this application. For example, the first packet is split into the plurality of first sub-packets based on a memory address range corresponding to the first packet, where one first sub-packet corresponds to one memory address interval in the memory address range.

When the first packet is split into the plurality of first sub-packets, the plurality of first sub-packets are sent based on the first connection group. Therefore, when the first connection group includes a plurality of connections, a plurality of first connections may be selected from the first connection group, to respectively send the plurality of first sub-packets to the second communication apparatus through the plurality of first connections. For example, first connections of a first quantity are selected from the plurality of connections included in the first connection group based on the first quantity of the plurality of first sub-packets. In other words, the plurality of first sub-packets are distributed to different connections for transmission. Alternatively, first connections of a second quantity may be selected from the plurality of connections included in the first connection group based on a first quantity of the plurality of first sub-packets. The second quantity is less than the first quantity.

In this case, an example in which the connection performance includes the send queue length is used, and the performance condition may be that the send queue length is the shortest and the second shortest. In conclusion, a principle of selecting the first connection may be optimal connection performance or payload balancing between the plurality of connections.

For example, refer to FIG. 4. WQ data delivered to a transport layer by using the APP1 may be split into a plurality of pieces of corresponding slice sub-WR data and distributed to a first physical QP connection, a second physical QP connection, and a third physical QP connection in a connection group 1. WQ data delivered to the transport layer by using the APP2 may be split into a plurality of pieces of corresponding slice sub-WR data and distributed to the first physical QP connection and the third physical QP connection in the connection group 1.

Therefore, compared with a single-connection mode of each service in a related technology, this embodiment of this application can enable each service to concurrently use a plurality of connections in one connection group, to implement payload balancing between the plurality of connections, thereby eliminating a risk of service interruption caused by a single-connection fault. When the plurality of connections correspond to a plurality of paths, payload balancing between a plurality of paths of a network can be further improved, thereby eliminating a risk of service interruption caused by a single-path fault.

In a possible implementation, when the first packet is an important packet, a first identifier is added to the first packet. The first identifier is used by the second communication apparatus that receives the first packet to determine that the first packet is an important packet. Optionally, the important packet is a packet whose loss has great impact on transmission performance. For example, the important packet may be the last packet, a control signaling packet, a detection packet, a heartbeat keep-alive packet, an address request packet, a packet loss retransmission packet, or a service-specified important packet in a send queue respectively corresponding to at least one connection.

A manner of adding the first identifier to the first packet is not limited in this embodiment of this application, provided that the second communication apparatus that receives the first packet can be enabled to determine, based on the first identifier, that the first packet is an important packet. For example, a mark is added to a reserved field of the first packet. When the first packet is split into the plurality of first sub-packets, and when the first packet is an important packet, all of the plurality of first sub-packets are important packets, and the first identifier is added to the plurality of first sub-packets; and when the first packet is an unimportant packet, it is sequentially determined whether each first sub-packet in the plurality of first sub-packets is an important packet, and the first identifier is added to each important packet in the plurality of first sub-packets.

When sending the first packet to the second communication apparatus based on the first connection group, the first communication apparatus sends, based on a routing algorithm, the first packet to the third communication apparatus that is used as an intermediate forwarding node in the network. When different connections in the first connection group are selected, because different connections may be routed to different physical paths, a next hop for sending the first packet by the first communication apparatus may be a different third communication apparatus. However, regardless of which communication apparatus the third communication apparatus that intermediately receives the first packet is, the third communication apparatus performs same operations.

In a possible implementation, when the first connection group includes the plurality of connections, the first communication apparatus further performs priority scheduling and congestion control between the plurality of connections. During the priority scheduling, different priorities may be set for different physical QP connections based on a service performance requirement, a service flow length, and the like. When a packet exists in a send queue SQ of a physical QP connection with a high priority, the physical QP connection with the high priority is preferentially scheduled for sending. For example, some physical QP connections are reserved in the connection group, and the physical QP connections are set to a high priority to transfer a small service flow, to reduce a packet loss rate of the small service flow.

A conventional congestion control algorithm may be loaded for the congestion control. For example, the congestion control algorithm includes the following four phases. In a first phase of slow-start, a sending node initially sends data slowly. After receiving acknowledgment information from a receiving node, the sending node starts to accelerate sending, to prevent entry into a congestion state. In a second phase of congestion avoidance, based on the slow-start, as the slow-start proceeds, a data transmission amount becomes quite large and increases rapidly, and a network congestion probability increases. Therefore, a threshold is set. When a data sending amount exceeds the threshold, a sending speed is reduced. In a third phase of fast retransmit, the receiving node acknowledges the last received ordered packet segment. When three same acknowledgment messages are returned consecutively, it indicates that a next packet segment is lost, and the sending node performs fast retransmission. In a fourth phase of fast recovery, when the sender receives three repeated acknowledgment messages consecutively, the threshold is reduced and the congestion avoidance is performed.

In addition, in addition to sending the first packet to the second communication apparatus based on the first connection group, because the first connection group is shared by services, the first communication apparatus may further send a second packet or a third packet based on the shared first connection group. For the second packet or the third packet in different cases, there are the following four scenarios in which the first communication apparatus sends the second packet or the third packet based on the shared first connection group, and the scenarios do not constitute a limitation.

Scenario 1: The first connection group includes the first connection between the first communication apparatus and the second communication apparatus, the first communication apparatus obtains a second packet corresponding to a second service, a destination of the second packet is the same as the destination of the first packet, and is the second communication apparatus. The first communication apparatus sends the second packet to the second communication apparatus based on the first connection in the first connection group.

Therefore, for packets that are of different services but that are destined for a same destination, a same connection in a same connection group can be shared and reused, so that a quantity of local connections does not increase with services, and data transmission performance is not limited by resources such as a network adapter memory, to further improve connection scalability.

Scenario 2: In addition to the first connection between the first communication apparatus and the second communication apparatus, the first connection group further includes a second connection between the first communication apparatus and the second communication apparatus. The first communication apparatus obtains a second packet corresponding to the first service, where a destination of the second packet is the second communication apparatus. The first communication apparatus may send the second packet to the second communication apparatus based on the second connection in the first connection group.

Therefore, transmission of different packets that are of a same service and that are destined for a same destination can be performed through different connections in a same connection group. A manner of performing transmission for the same service through a plurality of connections can implement payload balancing between the plurality of connections, and can avoid a service interruption problem caused by the single-connection fault. When the first connection in the first connection group is faulty, switching to the second connection in the first connection group can be performed for transmission, to ensure reliability and stability of service transmission. In addition, when different connections correspond to different physical paths in the network, payload balancing between a plurality of paths in the network can be further implemented, and a service interruption problem caused by a single-path fault can be avoided, to further ensure the reliability and stability of service transmission.

Scenario 3: The first communication apparatus obtains a third packet corresponding to the first service, where a destination of the third packet is a fourth communication apparatus. The first communication apparatus sends the third packet to the fourth communication apparatus based on the first connection group. Therefore, the first communication apparatus can send packets of a same service to the second communication apparatus and the fourth communication apparatus by using the shared first connection group, to further improve connection scalability and data transmission performance.

Scenario 4: The first communication apparatus obtains a second packet corresponding to a second service, where a destination of the second packet is a fourth communication apparatus. The first communication apparatus sends the second packet to the fourth communication apparatus based on the first connection group. Therefore, the first communication apparatus can send packets of different services to the second communication apparatus and the fourth communication apparatus by using the shared first connection group, to further improve connection scalability and data transmission performance.

Optionally, in Scenario 3 and Scenario 4, the first connection group is used for being shared by services transmitted by the first communication apparatus to the second communication apparatus, and may also be used for being shared by services transmitted by the first communication apparatus to the fourth communication apparatus. If the destination of the second packet is different from the destination of the first packet, the foregoing DC mode may be used for implementation. To be specific, the first communication apparatus may share a connection in one connection group with the second communication apparatus and the fourth communication apparatus, and cyclically establish connections to different destination communication apparatuses to perform data transmission.

Step 303: The third communication apparatus receives the first packet that corresponds to the first service and that is sent by the first communication apparatus based on the first connection group.

When the first communication apparatus sends, based on the first connection in the first connection group, the first packet corresponding to the first service, the third communication apparatus also receives the first packet that corresponds to the first service and that is sent by the first communication apparatus based on the first connection in the first connection group. In this embodiment of this application, after receiving the first packet that corresponds to the first service and that is sent by the first communication apparatus to the second communication apparatus, the third communication apparatus performs specific processing on the first packet. This is mainly reflected in performing protection processing on an important packet, to reduce a packet loss rate of the important packet on the third communication apparatus, and reduce impact of a packet loss on transmission performance.

In a possible implementation, when the first packet is an important packet, the third communication apparatus performs protection processing on the important packet. A manner of performing protection processing is not limited in this embodiment of this application, provided that a packet loss rate of the important packet can be reduced. For example, the third communication apparatus may perform protection processing on the important packet in the following manner: processing the first packet based on a first packet loss rate. The first packet loss rate is less than a packet loss rate of the unimportant packet. Optionally, the first packet carries a first mark, and the third communication apparatus determines, based on the first mark, that the first packet is an important packet. Configuring a packet loss rate less than a packet loss rate of an unimportant packet for the important packet, and processing the important packet based on the packet loss rate less than the packet loss rate of the unimportant packet can reduce a quantity of times the important packet is lost.

A value of the configured first packet loss rate is not limited in this embodiment of this application, provided that the value is less than the packet loss rate of the unimportant packet. Optionally, the packet loss rate is a probability that the packet is discarded, and a higher packet loss rate indicates a higher probability that the packet is discarded. For example, the packet loss rate of the unimportant packet is 80%, and the first packet loss rate may be any value from 0 to 80%. Optionally, the first packet loss rate may be 10%. A manner of processing the first packet based on the first packet loss rate may be that when the third communication apparatus needs to discard a packet, a random number is generated based on the first packet loss rate. When the random number is greater than a threshold, the first packet is discarded. When the random number is not greater than the threshold, the first packet is forwarded. The threshold may be flexibly adjusted based on an application scenario.

Optionally, the manner of processing the important packet based on the packet loss rate less than the packet loss rate of the unimportant packet may alternatively be placing the important packet into a reserved buffer (buffer), increasing a priority of the important packet, or the like. A packet in the reserved buffer is not discarded, and a packet with a high priority is not discarded first. Therefore, both can reduce the packet loss rate of the important packet. Because the packet loss rate of the important packet decreases, a quantity of times of timeout retransmission caused by the packet loss of the important packet also decreases. Because the timeout retransmission causes a large network delay, the decrease in the quantity of times of timeout retransmission reduces impact of the packet loss on the network delay.

Therefore, the third communication apparatus can accurately recognize, by using the first identifier added by the first communication apparatus to the important packet, the important packet that seriously affects service performance after being lost. Performing protection processing on the important packet by the third communication apparatus improves transmission stability of the important packet, and ensures service performance stability in a lossy network.

In a possible implementation, the third communication apparatus further receives a detection packet that is sent by the first communication apparatus based on any connection in the first connection group, and adds transmission information to the detection packet, where the transmission information includes at least one of a node identifier, a packet loss, a latency, or a throughput; and transmits the detection packet to which the transmission information is added. When the detection packet is transmitted back to the first communication apparatus, the first communication apparatus obtains at least one of latency performance or packet loss performance based on the transmission information added to the detection packet. For example, the detection packet includes a packet loss and a latency of each node on a physical path corresponding to any connection, and the first communication apparatus performs statistical analysis on the packet loss and the latency of each node, to obtain latency performance and packet loss performance corresponding to the any connection.

In this embodiment of this application, when the data amount of the first packet is greater than the threshold, the second communication apparatus receives the plurality of first sub-packets obtained by splitting the first packet. In a possible implementation, the third communication apparatus further includes an out-of-order marking function. For example, when the plurality of first sub-packets are out of order, an out-of-order identifier is added to an out-of-order first sub-packet in the plurality of first sub-packets, and the first sub-packet to which the out-of-order identifier is added is transmitted. The out-of-order identifier indicates that the plurality of first sub-packets are out of order but no packet is lost. Therefore, packet loss retransmission initiated when the receiving node mistakenly considers, due to an out-of-order case, that a packet loss occurs can be avoided.

For example, the plurality of first sub-packets received by the third communication apparatus respectively include sequence numbers sent in sequence, and the third communication apparatus can recognize a sequence number of each packet in the send queue, and determine, based on a sequence of the sequence numbers of the packets in the send queue, whether an out-of-order case occurs. For example, if the sequence of the sequence numbers of the packets in the send queue is 1, 2, 3, 5, and 4, it is determined that a packet whose sequence number is 5 is out of order but no packet is lost. Therefore, the out-of-order identifier is added to the packet whose sequence number is 5, so that when receiving the packet whose sequence number is 5 but not a packet whose sequence number is 4, the receiving node determines, based on the out-of-order identifier in the packet whose sequence number is 5, that the packet whose sequence number is 4 is not lost. If the sequence of the sequence numbers of the packets in the send queue is 1, 2, 3, 5, and 6, it is determined that no packet is out of order and a packet whose sequence number is 4 is lost, and the out-of-order identifier is not added to the packet whose sequence number is 5, so that when receiving a packet whose sequence number is 5 but not the packet whose sequence number is 4, the receiving node determines, based on the case in which the packet whose sequence number is 5 does not include the out-of-order identifier, that the packet whose sequence number is 4 is lost.

In addition, for the foregoing four scenarios in which the first communication apparatus sends the second packet or the third packet based on the shared first connection group, for Scenario 1, the third communication apparatus may further receive the second packet that corresponds to the second service and that is sent by the first communication apparatus based on the first connection, where the destination of the second packet is the second communication apparatus; for Scenario 2, the third communication apparatus may further receive the second packet that corresponds to the first service and that is sent by the first communication apparatus based on the second connection, where the destination of the second packet is the second communication apparatus; for Scenario 3, the third communication apparatus may further receive the third packet that corresponds to the first service and that is sent by the first communication apparatus based on the first connection group, where the destination of the third packet is the fourth communication apparatus; and for Scenario 4, the third communication apparatus may further receive a third packet that corresponds to the second service and that is sent by the first communication apparatus based on the first connection group, where a destination of the third packet is the fourth communication apparatus.

Step 304: The third communication apparatus sends the first packet to the second communication apparatus.

After receiving the first packet, the third communication apparatus may send the first packet to the second communication apparatus based on that the destination of the first packet is the second communication apparatus. Optionally, the third communication apparatus sends the first packet to the second communication apparatus based on the first connection.

Similarly, for the foregoing four scenarios in which the first communication apparatus sends the second packet or the third packet based on the shared first connection group, for Scenario 1, after receiving the second packet that corresponds to the second service and that is sent by the first communication apparatus based on the first connection, the third communication apparatus sends the second packet corresponding to the second service to the second communication apparatus based on the case in which the destination of the second packet is the second communication apparatus; for Scenario 2, after receiving the second packet that corresponds to the first service and that is sent by the first communication apparatus based on the second connection, the third communication apparatus sends the second packet corresponding to the first service to the second communication apparatus based on the case in which the destination of the second packet is the second communication apparatus; for Scenario 3, after receiving the third packet that corresponds to the first service and that is sent by the first communication apparatus based on the first connection group, the third communication apparatus sends the third packet corresponding to the first service to the fourth communication apparatus based on the case in which the destination of the third packet is the fourth communication apparatus; and for Scenario 4, after receiving the third packet that corresponds to the second service and that is sent by the first communication apparatus based on the first connection group, the third communication apparatus sends the third packet corresponding to the second service to the fourth communication apparatus based on the case in which the destination of the third packet is the fourth communication apparatus.

Step 305: The second communication apparatus receives the first packet corresponding to the first service.

In this embodiment of this application, the first packet that corresponds to the first service and that is sent by the first communication apparatus based on the first connection group may be sent to the second communication apparatus through the intermediate forwarding node. For example, by performing the foregoing step 301 to step 304, the second communication apparatus receives the first packet that corresponds to the first service and that is forwarded by the third communication apparatus. Optionally, if the first communication apparatus is directly connected to the second communication apparatus, the second communication apparatus may directly receive the first packet that corresponds to the first service and that is sent by the first communication apparatus based on the first connection group.

Therefore, the second communication apparatus can receive, based on the first connection group, the first packet corresponding to the first service. Same as the first communication apparatus, the second communication apparatus also includes a corresponding connection resource pool, and connection mapping is performed between a physical QP connection in the connection resource pool and a logical QP connection of an upper-layer application. In this case, after receiving the first packet of the first service based on the first connection group, the second communication apparatus sends the first packet of the first service to the upper-layer application through a corresponding logical QP connection.

In a possible implementation, when the data amount of the first packet is greater than the threshold, the second communication apparatus receives the plurality of first sub-packets obtained by splitting the first packet. In this case, the first communication apparatus further adds corresponding sequence numbers, sub-sequence numbers, and interface identifiers to the first sub-packets, so that after receiving the plurality of first sub-packets, the second communication apparatus can arrange and combine the plurality of first sub-packets based on the sequence numbers and the sub-sequence numbers, to obtain the first packet, and send the first packet to the application through a logical interface corresponding to the interface identifier.

When the second communication apparatus further includes the out-of-order marking function, and when the second communication apparatus receives any out-of-order first sub-packet in the plurality of first sub-packets, if the any first sub-packet does not carry an out-of-order identifier, the second communication apparatus determines that a packet loss occurs in the plurality of first sub-packets, and sends a packet loss notification message, to trigger packet loss retransmission. If the any first sub-packet carries an out-of-order identifier, and the second communication apparatus determines, based on the out-of-order identifier, that the plurality of first sub-packets are out of order but no packet is lost, the second communication apparatus does not send the packet loss notification message first, and sends a packet loss notification message if a first sub-packet before the out-of-order is still not received after a period of time.

In addition, for the foregoing four scenarios in which the first communication apparatus sends the second packet based on the shared first connection group, for Scenario 1, the second communication apparatus may further receive the second packet that corresponds to the second service and that is sent by the first communication apparatus based on the first connection in the first connection group. In this case, the destination of the second packet is the same as the destination of the first packet, but the second packet and the first packet belong to different services; and for Scenario 2, the second communication apparatus may further receive the second packet that corresponds to the first service and that is sent by the first communication apparatus based on the second connection in the first connection group. In this case, the destination of the second packet is the same as the destination of the first packet, and the second packet and the first packet belong to a same service.

In this embodiment of this application, the second service and the first service may be two service threads in a same service process, may be two service threads in different service processes of a same upper-layer application, or may be two service threads in different upper-layer applications.

According to the data transmission method provided in this embodiment of this application, a same connection group can be shared and reused to perform packet transmission, to improve the connection scalability, and improve the data transmission performance and reliability. In this embodiment of this application, a quantity of connection groups established in a connection resource pool is determined by a quantity of destination communication apparatuses, and a quantity of physical QP connections included in the connection group may be flexibly adjusted. Therefore, the quantity of physical QP connections does not increase with service data of an upper-layer application, so that a quantity of local connections is decoupled from a quantity of upper-layer services. In addition, as a network scale expands, when a quantity of local network adapter connections is limited and controlled, a connection scalable capability can be enhanced by establishing the connection resource pool. In addition, when the connection group includes a plurality of connections, because an RDMA multi-connection capability is implemented, payload balancing between the plurality of connections can be improved, and switching to another connection can be performed in a timely manner when a single connection is faulty, to improve transmission reliability. In addition, by identifying, recognizing, and protecting the important packet, a transmission tail latency caused by a loss of the important packet is effectively reduced, and stability of data transmission performance in the lossy network is further improved.

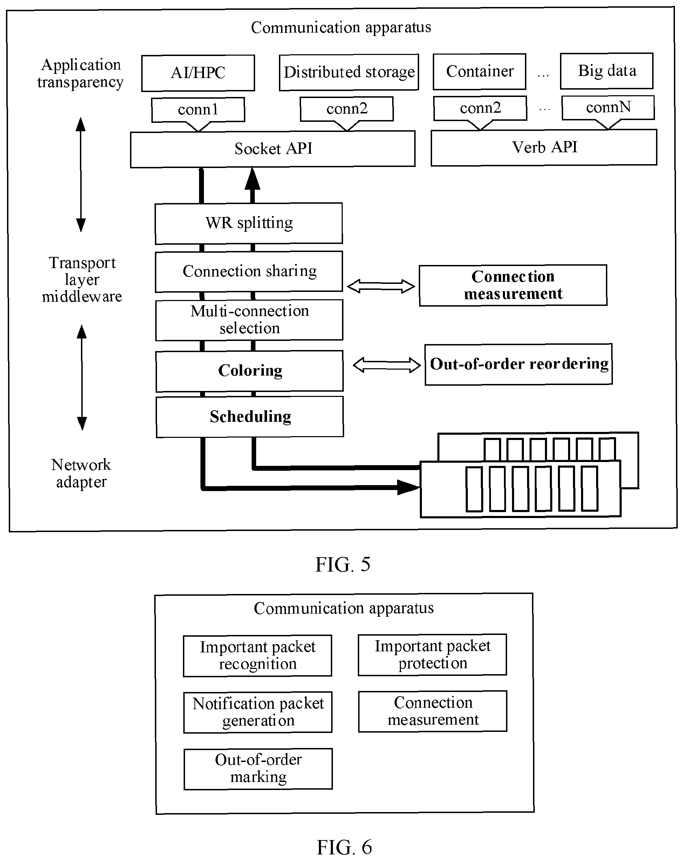

FIG. 5 is a diagram of functional modules of a communication apparatus according to an embodiment of this application. The communication apparatus shown in FIG. 5 may be configured to perform operations performed by the first communication apparatus or the second communication apparatus in the data transmission method shown in FIG. 3. In other words, the functional modules of the communication apparatus shown in FIG. 5 are configured to implement functional operations performed by the first communication apparatus or the second communication apparatus in the data transmission method shown in FIG. 3.

As shown in FIG. 5, the functional modules of the communication apparatus may be classified into an application layer, a transport layer, and a network adapter. For example, the application layer may include N (N is a positive integer) application services such as AI/HPC, distributed storage, a container, or big data. One application service includes at least one service. Optionally, each application service is connected to an application programming interface (application programming interface, API) through a corresponding connector (connector, Conn), and the API may be a socket (Socket) API or a verb (Verb) API.

An RDMA scenario is used as an example. In this embodiment of this application, a new RDMA loss-tolerant transport layer (that is, transport layer middleware shown in FIG. 5) is designed between the application service and the network adapter of the communication apparatus. The transport layer middleware includes a WR splitting module, a connection sharing module, a connection measurement module, a multi-connection selection module, a coloring module, an out-of-order reordering module, and a scheduling module. Some functional modules in the transport layer middleware may alternatively be offloaded to the network adapter. For example, the connection measurement module, the coloring module, the out-of-order reordering module, and the scheduling module may be offloaded to the network adapter. In this embodiment of this application, the first communication apparatus or the second communication apparatus may be middleware between application layer software and network adapter hardware, for example, the transport layer middleware shown in FIG. 5.

The WR splitting module is configured to split a large block of WR data into a plurality of WR sub-blocks. Optionally, after receiving WR data delivered by the application service through the API, the WR splitting module determines, by using a threshold (for example, an MTU), whether the WR data is a large block of WR data. Optionally, a manner of splitting the large block of WR data into the plurality of WR sub-blocks is limited. For example, the large block of WR data is split into the plurality of WR sub-blocks based on a memory address of the entire block in a starting address offset manner. Splitting the WR data into the WR sub-blocks can more easily implement fine-grained multi-connection scheduling and congestion control, to improve data transmission performance.

The connection sharing module is configured to establish a connection resource pool. The connection resource pool includes at least one connection group, and one connection group corresponds to one destination communication apparatus. In other words, all connection groups correspond to a same remote receiving node. Each connection group includes at least one QP connection, each QP connection has a same sending node and a same receiving node, and each QP connection has a different source port. Therefore, for any connection group, a network node can perform, based on different source ports of different QP connections included in any connection group, ECMP for the different QP connections to obtain different connections. In this case, different QP connections may correspond to different physical paths.

Optionally, when an application service of a local communication apparatus needs to communicate with an application service of a destination communication apparatus. For example, when WR data of an upper-layer application service is obtained through the API, the connection sharing module first searches the connection resource pool to determine whether a connection group corresponding to the destination communication apparatus exists. If the connection group corresponding to the destination communication apparatus exists, no new connection group is established; or if no connection group corresponding to the destination communication apparatus exists, a new connection group is established with an IP of the destination communication apparatus, and an original connection established by the application service is used as a logical QP connection. A QP connection in the connection pool is a physical QP connection for actually sending data.

In this embodiment of this application, for a WR sub-block from the logical QP connection, the connection sharing module includes, based on a destination IP of the WR sub-block, the WR sub-block in a connection group of a destination communication apparatus corresponding to the destination IP, and sends the WR sub-block. WR sub-blocks of logical QP connections from different upper-layer services may be sent through physical QP connections in a same connection group, provided that destination IPs of the WR sub-blocks correspond to a same destination communication apparatus. Therefore, mutual mapping between the physical QP connection and the logical QP connection in the connection resource pool is implemented, and connection sharing and reusing are implemented.

A connection mode of the physical QP connection in the connection resource pool is not limited in this embodiment of this application. For example, the connection mode may be an RC connection mode or a DC connection mode. In a possible implementation, for a service flow of a service, if no corresponding connection group exists in the connection resource pool, the service flow may be first sent based on an established physical QP connection in the DC mode, and when a sending data amount of the service flow exceeds a specific threshold, switching to an established physical QP connection in the RC mode is performed for sending. Because an establishment speed of the physical QP connection in the DC mode is higher than an establishment speed of the physical QP connection in the RC mode, first performing sending based on the physical QP connection in the DC mode can increase a data transmission speed and reduce a transmission delay. After switching to the physical QP connection in the RC mode is performed, a problem of low efficiency caused by switching between different destination communication apparatuses that is caused by the DC mode can be resolved.

Optionally, for data transmission in a bilateral operation, the connection sharing module is further configured to add an identifier (identifier, ID) of the logical QP connection to each WR sub-block, so that the receiving node can submit, based on the ID of the logical QP connection in each WR sub-block, the large block of WR data before the large block of WR data is split into WR sub-blocks to an original connection invoked by the application service.

The connection measurement module is configured to send a detection packet to perform connection information measurement. The connection measurement module may periodically perform connection measurement, or may perform connection measurement in an event triggering manner. The detection packet may be an associated packet whose transmission is performed through a physical QP connection corresponding to a to-be-measured connection, for example, any WR sub-block sent based on the physical QP connection; or may be a specified detection packet having a detection function. A 5-tuple of the detection packet is the same as a 5-tuple of the physical QP connection corresponding to the to-be-measured connection, to ensure that physical paths on an intermediate forwarding node are the same. Therefore, latencies, packet losses, and the like corresponding to different physical QP connections can be measured by using the connection measurement module, so that connection performance of different physical QP connections in the connection resource pool can be marked in real time.

The multi-connection selection module is configured to select at least one physical QP connection from a determined connection group. Optionally, the multi-connection selection module distributes different WR sub-blocks to different physical QP connections based on connection performance of different physical QP connections. For example, a distribution manner may be an RR manner, weight allocation, a shortest QP connection, or shortest SQ queuing in a QP connection. In this embodiment of this application, the multi-connection selection module is further configured to: when connection performance of any physical QP connection in the connection resource pool deteriorates, prune and replace the any physical QP connection, in other words, delete the any physical QP connection from the connection group.

Optionally, for the data transmission in the bilateral operation, the multi-connection selection module adds, to each WR sub-block, an identifier WR_ID of the large block of WR data existing before splitting and a sequence number WR_SEQ of the WR sub-block obtained through splitting, so that the receiving node can sort and combine WR sub-blocks with a same WR_ID based on the WR_ID and WR_SEQ in each WR sub-block and a sequence of the WR_SEQ, to obtain the large block of WR data existing before splitting.

The coloring module is configured to color an important packet, to be specific, mark a reserved field of the important packet. Optionally, the important packet is a packet whose loss has serious deterioration impact on service performance. For example, the important packet may include a detection packet used for connection measurement, a WR sub-block at a tail of a send queue SQ, a service transfer control signaling packet, a packet loss retransmission packet, a heartbeat keep-alive packet, an address request packet, or a service-specified important packet. If the packet loss retransmission packet needs to be colored, the coloring module needs to be implemented on the network adapter, and data is sent by using the network adapter to determine the packet loss retransmission packet.

The out-of-order reordering module is configured to sort WR sub-blocks obtained through splitting. Optionally, after a large block of WR data is split into a plurality of WR sub-blocks, because multi-connection transmission of the plurality of WR sub-blocks is implemented through a plurality of shared and reused physical QP connections, time for completing transmission of the WR sub-blocks may be different. Therefore, CQE completion time of the WR sub-blocks may be different. The out-of-order reordering module is configured to: record a quantity of WR sub-blocks obtained through splitting, and when a quantity of completed CQEs of the WR sub-blocks is equal to the quantity of WR sub-blocks, aggregate CQEs of the WR sub-blocks into a CQE of the large block of WR data existing before splitting, to submit the CQE to an upper-layer application service. Therefore, in the foregoing process, the application service invokes the API to send a WQE of the large block of WR data, and receives the CQE of the large block of WR data. In this way, the application service is unaware of splitting, that is, application transparency is implemented.

In this embodiment of this application, for the data transmission in the bilateral operation, the out-of-order reordering module of the receiving node is configured to: sort and combine the WR sub-blocks with the same WR_ID based on the WR_ID and WR_SEQ in each WR sub-block and the sequence of the WR_SEQ. The out-of-order reordering module is further configured to perform order-preserving for two pieces of unacknowledged WR data with a same destination IP, to be specific, send one piece of WR data after the other piece of WR data is acknowledged. The out-of-order reordering module is further configured to implement a selective retransmission mechanism. The selective retransmission mechanism is a mechanism that can implement retransmission of only a lost packet.

The scheduling module is configured to perform priority scheduling and congestion control between different physical QP connections. Therefore, scheduling and sending are performed between connections selected by the foregoing multi-connection selection module, to meet payload balancing between the plurality of connections and ensure transmission performance of the plurality of connections.

Therefore, by using the foregoing functional modules, an existing RDMA interface can be used, and a high-performance and high-reliability service of a large-scale RDMA lossy network can be implemented by using a connection group sharing and reusing method, to improve RDMA connection scalability and resolve a problem that a connection scale is limited. When the connection group includes the plurality of connections, a service interruption problem caused by single-connection transmission can be avoided through payload sharing and scheduling between the plurality of connections, to further ensure high reliability of the data transmission. When the plurality of connections correspond to a plurality of different physical paths, a payload balancing problem between a plurality of equal-cost paths in the network can be resolved.

FIG. 6 is a diagram of functional modules of a communication apparatus according to an embodiment of this application. The communication apparatus shown in FIG. 6 may be configured to perform operations performed by the third communication apparatus in the data transmission method shown in FIG. 3. In other words, the functional modules of the communication apparatus shown in FIG. 6 are configured to implement functional operations performed by the third communication apparatus in the data transmission method shown in FIG. 3.

As shown in FIG. 6, the functional modules of the communication apparatus include an important packet recognition module, an important packet protection module, a notification packet generation module, a connection measurement module, and an out-of-order marking module. The communication apparatus shown in FIG. 6 is configured to cooperate with the communication apparatus shown in FIG. 5 to implement the data transmission method provided in embodiments of this application. The communication apparatus shown in FIG. 6 is mainly configured to perform differentiated processing on an important packet.

The important packet recognition module is configured to recognize the important packet, that is, recognize a packet colored by the foregoing coloring module. Optionally, a received packet is parsed, and when a reserved field of the packet includes a color mark, it is determined that the received packet is an important packet.

The important packet protection module is configured to perform protection processing on the important packet to reduce a packet loss rate of the important packet. For example, the important packet is placed in a reserved buffer (buffer), and a priority of the important packet is increased.

The notification packet generation module is configured to: construct, based on a requirement, a notification packet without a payload (payload) and send the notification packet to a receiving node; or construct a negative acknowledgment (not acknowledgment, NAK) packet or an acknowledgment (acknowledgment, ACK) packet and send the NAK packet or the ACK packet to a sending node; or when network congestion occurs, construct a congestion notification packet and send the congestion notification packet to a sending node.

The connection measurement module is configured to: receive a detection packet sent by the connection measurement module in the communication apparatus shown in FIG. 5, and add information such as an identifier, a packet loss, a latency, and a throughput of the communication apparatus to the detection packet, to help send the detection packet back to the communication apparatus shown in FIG. 5 to complete connection measurement.

The out-of-order marking module is configured to: when the communication apparatus causes a packet to be out of order during forwarding, add an out-of-order identifier to the out-of-order packet, to help the receiving node distinguish between a packet loss and packet out-of-order. For example, if receiving an out-of-order packet to which no out-of-order identifier is added, the receiving node considers that a packet loss occurs, and sends a packet loss notification message. If receiving an out-of-order packet to which the out-of-order identifier is added, the receiving node considers that the out-of-order case occurs but no packet is lost, and delays sending the packet loss notification message.

Therefore, the foregoing functional modules are used to perform differentiated processing on the important packet to reduce a packet loss hazard, and reduce tail latency deterioration impact such as timeout retransmission caused by a network packet loss or the like.

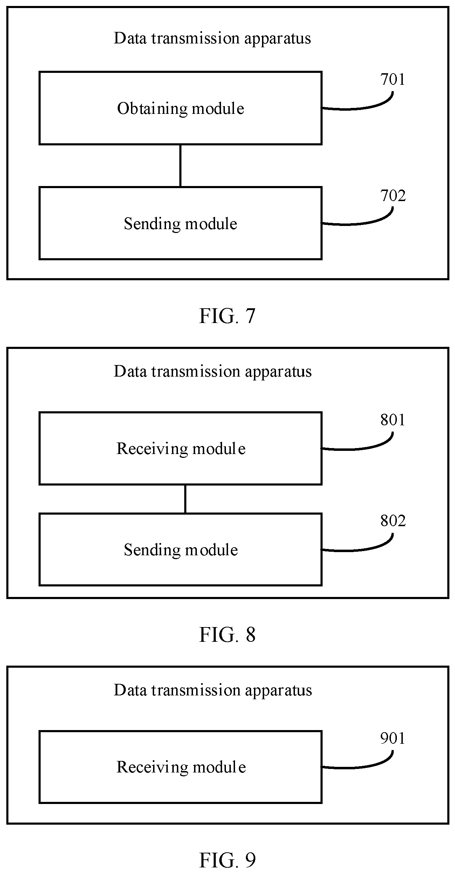

The foregoing describes the data transmission method in embodiments of this application. Corresponding to the foregoing method, an embodiment of this application further provides a data transmission apparatus. FIG. 7 is a diagram of a structure of a data transmission apparatus according to an embodiment of this application. The apparatus is used in the first communication apparatus shown in FIG. 3. Based on the following plurality of modules shown in FIG. 7, the data transmission apparatus shown in FIG. 7 can perform all or some operations performed by the first communication apparatus. It should be understood that the apparatus may include more additional modules than the shown modules, or a part of the shown modules are omitted. This is not limited in this embodiment of this application. As shown in FIG. 7, the apparatus includes the following.

An obtaining module 701 is configured to obtain a first packet corresponding to a first service, where a destination of the first packet is a second communication apparatus.

A sending module 702 is configured to send the first packet to the second communication apparatus based on a first connection group, where the first connection group is shared by services transmitted by the first communication apparatus.

In a possible implementation, the first connection group includes a first connection between the first communication apparatus and the second communication apparatus, and the sending module 702 is configured to send the first packet to the second communication apparatus based on the first connection.

The obtaining module 701 is further configured to obtain a second packet corresponding to a second service, where a destination of the second packet is the second communication apparatus.

The sending module 702 is further configured to send the second packet to the second communication apparatus based on the first connection.

In a possible implementation, the first connection group includes the first connection between the first communication apparatus and the second communication apparatus, and the sending module 702 is configured to send the first packet to the second communication apparatus based on the first connection.

The obtaining module 701 is further configured to obtain a second packet corresponding to the first service, where a destination of the second packet is the second communication apparatus.

The sending module 702 is further configured to send the second packet to the second communication apparatus based on a second connection.

In a possible implementation, the sending module 702 is configured to select, based on that connection performance of the first connection meets a performance condition, the first connection to send the first packet to the second communication apparatus. The connection performance includes at least one of a send queue length, latency performance, or packet loss performance.

In a possible implementation, the first communication apparatus includes a connection resource pool, the connection resource pool includes at least one connection group, each connection group corresponds to one destination communication apparatus, and the at least one connection group includes the first connection group.

In a possible implementation, the apparatus further includes the following.

A splitting module is configured to: when a data amount of the first packet is greater than a threshold, split, by the first communication apparatus, the first packet into a plurality of first sub-packets.

The sending module 702 is configured to send the plurality of first sub-packets to the second communication apparatus based on the first connection group.

In a possible implementation, the first communication apparatus includes an application layer and a transport layer. The obtaining module 701 is configured to receive, by the transport layer, the first packet that corresponds to the first service and that is sent by the application layer by invoking a logical interface of the first service.

The sending module 702 is configured to: when the transport layer obtains notification messages respectively corresponding to the plurality of first sub-packets, invoke, by the transport layer, the logical interface of the first service to send the notification message corresponding to the first packet to the application layer.

In a possible implementation, the first communication apparatus is middleware between application layer software and network adapter hardware.

In a possible implementation, the first packet is transmitted according to an RDMA protocol.

FIG. 8 is a diagram of a structure of a data transmission apparatus according to an embodiment of this application. The apparatus is used in the third communication apparatus shown in FIG. 3. Based on the following plurality of modules shown in FIG. 8, the data transmission apparatus shown in FIG. 8 can perform all or some operations performed by the third communication apparatus. It should be understood that the apparatus may include more additional modules than the shown modules, or a part of the shown modules are omitted. This is not limited in this embodiment of this application. As shown in FIG. 8, the apparatus includes the following.

A receiving module 801 is configured to receive a first packet that corresponds to a first service and that is sent by a first communication apparatus based on a first connection group, where a destination of the first packet is a second communication apparatus, and the first connection group is shared by services transmitted by the first communication apparatus.

A sending module 802 is configured to send the first packet to the second communication apparatus.

In a possible implementation, the first connection group includes a first connection between the first communication apparatus and the second communication apparatus, and the receiving module 801 is configured to receive the first packet that corresponds to the first service and that is sent by the first communication apparatus based on the first connection.

The receiving module 801 is further configured to receive a second packet that corresponds to a second service and that is sent by the first communication apparatus based on the first connection, where a destination of the second packet is the second communication apparatus.

The sending module 802 is further configured to send the second packet to the second communication apparatus.

In a possible implementation, the first connection group includes a first connection and a second connection between the first communication apparatus and the second communication apparatus, and the receiving module 801 is configured to receive the first packet that corresponds to the first service and that is sent by the first communication apparatus based on the first connection.

The receiving module 801 is further configured to receive a second packet that corresponds to the first service and that is sent by the first communication apparatus based on the second connection, where a destination of the second packet is the second communication apparatus.

The sending module 802 is further configured to send the second packet to the second communication apparatus.

In a possible implementation, the first packet includes a plurality of first sub-packets, and the apparatus further includes: an adding module, configured to: when the plurality of first sub-packets are out of order, add an out-of-order identifier to an out-of-order first sub-packet in the plurality of first sub-packets; and
a transmission module, configured to transmit the first sub-packet to which the out-of-order identifier is added, where the out-of-order identifier indicates that the plurality of first sub-packets are out of order but no packet is lost.

In a possible implementation, the first packet is transmitted according to an RDMA protocol.

FIG. 9 is a diagram of a structure of a data transmission apparatus according to an embodiment of this application. The apparatus is used in the second communication apparatus shown in FIG. 3. Based on the following plurality of modules shown in FIG. 9, the data transmission apparatus shown in FIG. 9 can perform all or some operations performed by the second communication apparatus. It should be understood that the apparatus may include more additional modules than the shown modules, or a part of the shown modules are omitted. This is not limited in this embodiment of this application. As shown in FIG. 9, the apparatus includes the following.

A receiving module 901 is configured to receive a first packet corresponding to a first service, where the first packet is sent by a first communication apparatus based on a first connection group, a destination of the first packet is the second communication apparatus, and the first connection group is shared by services transmitted by the first communication apparatus.

In a possible implementation, the first connection group includes a first connection between the first communication apparatus and the second communication apparatus, and the first packet is sent by the first communication apparatus based on the first connection.

The receiving module 901 is further configured to receive a second packet corresponding to a second service, where the second packet is sent by the first communication apparatus based on the first connection, and a destination of the second packet is the second communication apparatus.

In a possible implementation, the first connection group includes a first connection and a second connection between the first communication apparatus and the second communication apparatus, and the first packet is sent by the first communication apparatus based on the first connection.

The receiving module 901 is further configured to receive a second packet corresponding to the first service, where the second packet is sent by the first communication apparatus based on the second connection, and a destination of the second packet is the second communication apparatus.

In a possible implementation, the first packet includes a plurality of first sub-packets, and the second communication apparatus includes an application layer and a transport layer.

The receiving module 901 is configured to: receive, by the transport layer, the plurality of first sub-packets, where the plurality of first sub-packets respectively include corresponding sequence numbers, sub-sequence numbers, and interface identifiers, and the plurality of first sub-packets are obtained by the first communication apparatus by splitting the first packet; arrange and combine, by the transport layer, the plurality of first sub-packets based on the sequence numbers and the sub-sequence numbers to obtain the first packet; and invoke, by the transport layer, a logical interface corresponding to the interface identifier to send the first packet to the application layer.

In a possible implementation, the apparatus further includes the following.

A determining module is configured to: when any out-of-order first sub-packet is received, if the any first sub-packet carries an out-of-order identifier, determine, based on the out-of-order identifier, that the plurality of first sub-packets are out of order but no packet is lost.

In a possible implementation, the second communication apparatus is middleware between application layer software and network adapter hardware.

In a possible implementation, the first packet is transmitted according to an RDMA protocol.

By using the data transmission apparatus provided in this embodiment of this application, sharing and reusing of a connection group are implemented, so that a quantity of local connections does not increase with services, and data transmission performance is not limited by resources such as a network adapter memory. In addition, when the connection group includes a plurality of connections, because an RDMA multi-connection capability is implemented, payload balancing between the plurality of connections can be improved, and switching to another connection can be performed in a timely manner when a single connection is faulty, to improve transmission reliability. In addition, by identifying, recognizing, and protecting an important packet, a transmission tail latency caused by a loss of the important packet is effectively reduced, and stability of data transmission performance in a lossy network is further improved.

It should be understood that, when the apparatus provided in FIG. 7 to FIG. 9 implements functions of the apparatus, division of the foregoing functional modules is merely used as an example for description. In actual application, the foregoing functions may be allocated to different functional modules for implementation as required. In other words, an internal structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein.

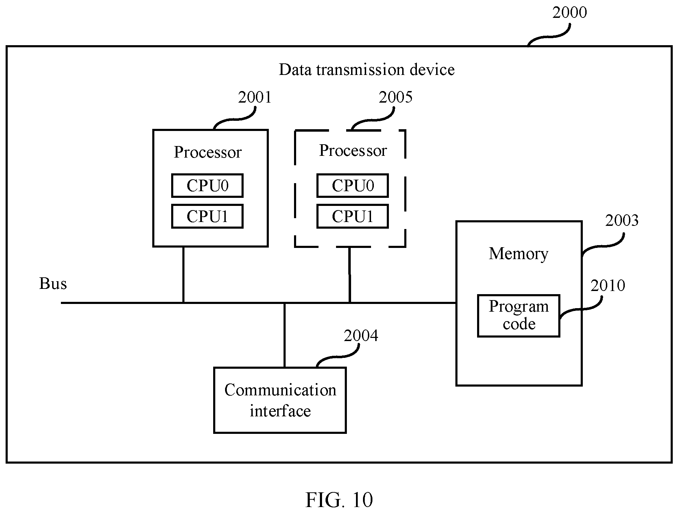

FIG. 10 is a diagram of a structure of a data transmission device 2000 according to an example embodiment of this application. The data transmission device 2000 shown in FIG. 10 is configured to perform operations related to the data transmission method shown in FIG. 3. The data transmission device 2000 is, for example, a switch or a router. The data transmission device 2000 may be implemented by using a general bus system architecture.

As shown in FIG. 10, the data transmission device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the data transmission device 2000 further includes a bus. The bus is configured to perform transmission of information between components of the data transmission device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of indication, the bus is indicated by using only one line in FIG. 10. However, it does not indicate that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or other compact disc storage, optical disk storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 2003 exists independently, and is connected to the processor 2001 through the bus. Alternatively, the memory 2003 may be integrated with the processor 2001.

The communication interface 2004 uses any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the data transmission device 2000 to communicate with another device.

During specific implementation, in an embodiment, the processor 2001 may include one or more CPUs, for example, a CPU0 and a CPU1 shown in FIG. 10. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may include a plurality of processors, for example, the processor 2001 and a processor 2005 shown in FIG. 10. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector). The input device communicates with the processor 2001, and may receive an input from a user in a plurality of manners. For example, the input device may be a mouse, a keyboard, a touchscreen device, or a sensor device.

In some embodiments, the memory 2003 is configured to store program code 2010 for executing the solutions of this application, and the processor 2001 may execute the program code 2010 stored in the memory 2003. In other words, the data transmission device 2000 may implement, by using the processor 2001 and the program code 2010 in the memory 2003, the data transmission method provided in the method embodiments. The program code 2010 may include one or more software modules. Optionally, the processor 2001 may alternatively store program code or instructions for executing the solutions of this application.

The data transmission device 2000 in this embodiment of this application may correspond to the third communication apparatus in the foregoing method embodiments. The processor 2001 in the data transmission device 2000 reads the instructions in the memory 2003, to enable the data transmission device 2000 shown in FIG. 10 to perform all or some operations performed by the third communication apparatus.

Specifically, the processor 2001 is configured to: receive a first packet that corresponds to a first service and that is sent by a first communication apparatus based on a first connection group, where a destination of the first packet is a second communication apparatus, and the first connection group is shared by services transmitted by the first communication apparatus; and send the first packet to the second communication apparatus.

For brevity, another optional implementation is not described herein again.

The data transmission device 2000 may further correspond to the data transmission apparatus shown in FIG. 8. Each functional module in the data transmission apparatus is implemented by using software of the data transmission device 2000. In other words, the functional module included in the data transmission apparatus is generated after the processor 2001 of the data transmission device 2000 reads the program code 2010 stored in the memory 2003.

The steps of the data transmission method shown in FIG. 3 are completed by an integrated logic circuit of hardware in the processor of the data transmission device 2000 or instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps of the foregoing methods in combination with hardware of the processor. To avoid repetition, details are not described herein again.

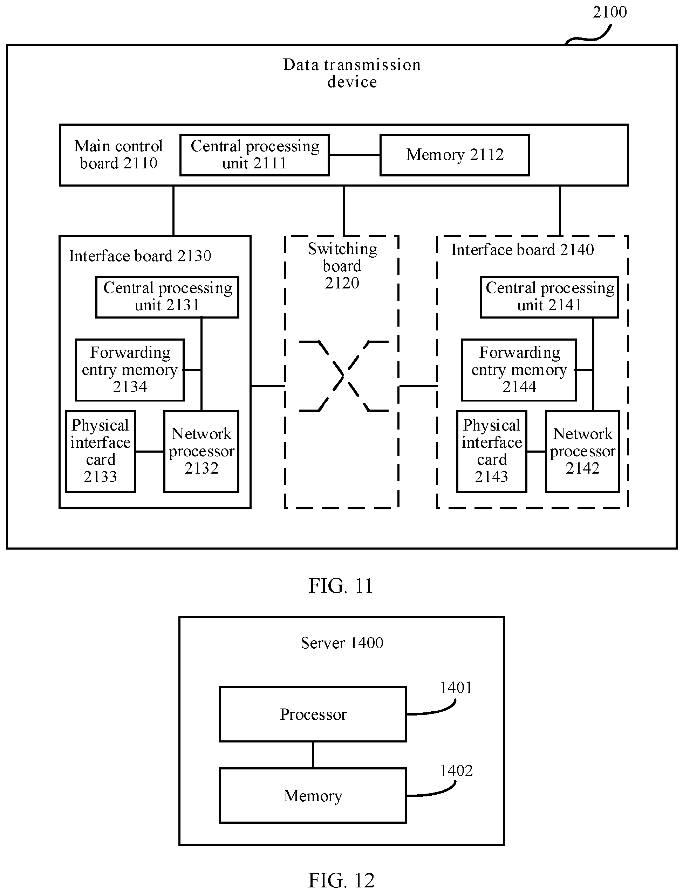

FIG. 11 is a diagram of a structure of a data transmission device 2100 according to another example embodiment of this application. The data transmission device 2100 shown in FIG. 11 is configured to perform all or some operations related to the data transmission method shown in FIG. 3. The data transmission device 2100 is, for example, a switch or a router. The data transmission device 2100 may be implemented by using a general bus system architecture.

As shown in FIG. 11, the data transmission device 2100 includes a main control board 2110 and an interface board 2130.

The main control board is also referred to as a main processing unit (main processing unit, MPU) or a route processor card (route processor card). The main control board 2110 is configured to: control and manage each component in the data transmission device 2100, including route calculation, device management, device maintenance, and protocol processing functions. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (packet over SONET/SDH) interface and the like. The Ethernet interface is, for example, a flexible Ethernet service interface (flexible Ethernet clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to: forward a received packet based on a forwarding table stored in the forwarding entry memory 2134, and if a destination address of the packet is an address of the data transmission device 2100, send the packet to the CPU (for example, the central processing unit 2131) for processing; and if the destination address of the packet is not the address of the data transmission device 2100, search, based on the destination address, the forwarding table for a next hop and an outbound interface that correspond to the destination address, and forward the packet to the outbound interface that corresponds to the destination address. Processing an uplink packet may include: processing an inbound interface of the packet and searching a forwarding table. Processing a downlink packet may include: searching a forwarding table, and the like. In some embodiments, the central processing unit may alternatively perform a function of a forwarding chip, for example, implement software forwarding based on a general-purpose CPU. Therefore, the forwarding chip is not needed in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may alternatively perform a function of the network processor 2132, for example, implement software forwarding based on the general-purpose CPU. Therefore, the network processor 2132 is not needed in the physical interface card 2133.

Optionally, the data transmission device 2100 includes a plurality of interface boards. For example, the data transmission device 2100 further includes an interface board 2140, and the interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the data transmission device 2100 further includes a switching board 2120. The switching board 2120 may also be referred to as a switch fabric unit (switch fabric unit, SFU). When the data transmission device 2100 has a plurality of interface boards, the switching board 2120 is configured to complete data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the data transmission device 2100 includes a control plane and a forwarding plane. The control plane includes the main control board 2110 and the central processing unit 2111. The forwarding plane includes components that perform forwarding, such as the forwarding entry memory 2134, the physical interface card 2133, and the network processor 2132. The control plane performs functions such as a function of a router, forwarding table generation, signaling and protocol packet processing, and data transmission device status configuration and maintenance. The control plane delivers a generated forwarding table to the forwarding plane. On the forwarding plane, the network processor 2132 performs table lookup and forwarding on a packet received by the physical interface card 2133 based on the forwarding table delivered by the control plane. The forwarding table delivered by the control plane may be stored in the forwarding entry memory 2134. In some embodiments, the control plane and the forwarding plane may be completely separated, and are not on a same data transmission device.

It should be noted that there may be one or more main control boards, and when there are a plurality of main control boards, a primary main control board and a secondary main control board may be included. There may be one or more interface boards, and a data transmission device having a stronger data processing capability provides more interface boards. There may also be one or more physical interface cards on the interface board. There may be no switching board, or one or more switching boards. When there are a plurality of switching boards, payload sharing and redundancy backup may be implemented together. In a centralized forwarding architecture, the data transmission device may need no switching board, and the interface board undertakes a service data processing function of an entire system. In a distributed forwarding architecture, the data transmission device may have at least one switching board, and exchange data between a plurality of interface boards by using the switching board, to provide a large-capacity data exchange and processing capability. Therefore, a data access and processing capability of the data transmission device in the distributed architecture is greater than that of the data transmission device in the centralized architecture. Optionally, a form of the data transmission device may also be that there is only one board, in other words, there is no switching board, and functions of the interface board and the main control board are integrated on the board. In this case, a central processing unit on the interface board and a central processing unit on the main control board may be combined into one central processing unit on the board to perform a function obtained through overlapping of the two central processing units. The data transmission device in this form has a low data exchange and processing capability (for example, a data transmission device such as a low-end switch or a router). A specific architecture that is to be used depends on a specific networking deployment scenario. This is not limited herein.

In a specific embodiment, the data transmission device 2100 corresponds to the data transmission apparatus shown in FIG. 8. In some embodiments, the receiving module 801 in the data transmission apparatus shown in FIG. 8 is equivalent to the physical interface card 2133 in the data transmission device 2100.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by a first communication apparatus, perform the method that needs to be performed by a second communication apparatus, or perform the method that needs to be performed by a third communication apparatus.

An embodiment of this application further provides a data transmission device. The data transmission device includes a processor, the processor is coupled to a memory, the memory stores at least one program instruction or code, and the at least one program instruction or code is loaded and executed by the processor, to enable the data transmission device to implement the data transmission method shown in FIG. 3. Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

FIG. 12 is a diagram of a structure of a server according to an embodiment of this application. The server 1400 shown in FIG. 12 is configured to perform operations related to the first communication apparatus or the second communication apparatus in the data transmission method shown in FIG. 3. The server 1400 may have a large difference due to different configurations or performance, and may include one or more processors 1401 and one or more memories 1402. The one or more memories 1402 store at least one computer program, and the at least one computer program is loaded and executed by the one or more processors 1401, to enable the server to implement the data transmission method provided in the foregoing method embodiments. Certainly, the server 1400 may further include components such as a wired or wireless network interface, a keyboard, and an input/output interface, to perform input/output. The server 1400 may further include other components configured to implement device functions. Details are not described herein.

An embodiment of this application further provides a data transmission system. The data transmission system includes a first communication apparatus and a second communication apparatus. Optionally, the data transmission system further includes a third communication apparatus. For a data transmission method performed by the first communication apparatus, the second communication apparatus, and the third communication apparatus, refer to related descriptions of the embodiment shown in FIG. 3. Details are not described herein again. For example, the first communication apparatus and the second communication apparatus are the server 1400 shown in FIG. 12, and the third communication apparatus is the data transmission device 2000 shown in FIG. 10 or the data transmission device 2100 shown in FIG. 11.

It should be understood that the processor may be a CPU, or may be another general-purpose processor, digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing data transmission methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to invoke, from a memory, instructions stored in the memory and run the instructions, to enable a communication device in which the chip is installed to perform any one of the foregoing data transmission methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing data transmission methods.

All or some of the embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to this application are completely or partially generated. The computer may be a general-purpose computer, a dedicated computer, a computer network, or other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of the foregoing embodiments may be implemented by the hardware, or may be implemented by a program instructing related hardware. The program may be stored in a computer-readable storage medium. The mentioned storage medium may be a read-only memory, a magnetic disk, a compact disc, or the like.

When the software is used to implement the embodiments, all or some of the embodiments may be implemented in a form of a computer program product. The computer program product includes one or more computer program instructions. In an example, the method according to embodiments of this application may be described in a context of machine-executable instructions. For example, the machine-executable instructions are included in a program module that is in a device for execution on a real or virtual processor of a target. Generally, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, the function/operation specified in the flowchart and/or block diagram is implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, to enable the device, the apparatus, or the processor to perform various types of processing and operations described above. Examples of the carrier include a signal, a computer-readable medium, and the like.

Examples of the signal may include an electrical signal, an optical signal, a radio signal, a voice signal, and other forms of propagated signals, such as a carrier wave and an infrared signal.

A machine-readable medium may be any tangible medium that includes or stores programs used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk drive, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a specific working process of the foregoing system, device, and module, refer to a corresponding process in the foregoing method embodiments. Details are not described herein.

In the several embodiments provided in this application, it should be understood that the disclosed system, device, and method may be implemented in other manners. For example, the described device embodiment is merely an example. For example, division into modules is merely logical function division, and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by using some interfaces, devices, or modules, or may be electrical, mechanical, or other forms of connections.

The modules described as separate components may or may not be physically separate, and components displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The foregoing integrated module may be implemented in a form of hardware, or may be implemented in a form of a software functional module.

If the integrated module is implemented in the form of a software functional module and sold or used as an independent product, the integrated module may be stored in a computer-readable storage medium. Based on such an understanding, the technical solutions in this application essentially, or the part contributing to a conventional technology, or all or some of the technical solutions may be represented in a form of a software product. The computer software product is stored in a storage medium and includes several instructions for instructing a computer device (may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the terms such as "first" and "second" are used in the following descriptions to describe various elements, these elements should not be limited by the terms. These terms are merely used to distinguish one element from another element. For example, a first image may be referred to as a second image, and similarly, a second image may be referred to as a first image, without departing from the scope of the various examples. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" means two or more. For example, a plurality of second packets mean two or more second packets. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the term "if" may be interpreted to mean "when" ("when" or "upon"), "in response to determining", or "in response to detecting". Similarly, according to the context, the phrase "if it is determined that" or "if [a stated condition or event] is detected" may be interpreted as a meaning of "when it is determined that", "in response to determining", "when [a stated condition or event] is detected", or "in response to detecting [a stated condition or event]".

It should be understood that determining B based on A does not mean that B is determined only based on A, and B may alternatively be determined based on A and/or other information.

It is to be understood that "one embodiment", "an embodiment", and "a possible implementation" mentioned in the entire specification mean that particular features, structures, or characteristics related to the embodiment or the implementation are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A data transmission method, wherein the method is applied to a first communication apparatus, and comprises:
obtaining, by the first communication apparatus, a first packet corresponding to a first service, wherein a destination of the first packet is a second communication apparatus; and
sending, by the first communication apparatus, the first packet to the second communication apparatus based on a first connection group, wherein the first connection group is shared by services transmitted by the first communication apparatus.

2. The method according to claim 1, wherein the first connection group comprises a first connection between the first communication apparatus and the second communication apparatus, and the sending, by the first communication apparatus, the first packet to the second communication apparatus based on a first connection group comprises:
sending, by the first communication apparatus, the first packet to the second communication apparatus based on the first connection; and
the method further comprises:
obtaining, by the first communication apparatus, a second packet corresponding to a second service, wherein a destination of the second packet is the second communication apparatus; and
sending, by the first communication apparatus, the second packet to the second communication apparatus based on the first connection.

3. The method according to claim 1, wherein the first connection group comprises a first connection and a second connection between the first communication apparatus and the second communication apparatus, and the sending, by the first communication apparatus, the first packet to the second communication apparatus based on a first connection group comprises:
sending, by the first communication apparatus, the first packet to the second communication apparatus based on the first connection; and
the method further comprises:
obtaining, by the first communication apparatus, a second packet corresponding to the first service, wherein a destination of the second packet is the second communication apparatus; and
sending, by the first communication apparatus, the second packet to the second communication apparatus based on the second connection.

4. The method according to claim 2 or 3, wherein the sending, by the first communication apparatus, the first packet to the second communication apparatus based on the first connection comprises:
selecting, by the first communication apparatus based on that connection performance of the first connection meets a performance condition, the first connection to send the first packet to the second communication apparatus, wherein the connection performance comprises at least one of a send queue length, latency performance, or packet loss performance.

5. The method according to any one of claims 1 to 4, wherein the first communication apparatus comprises a connection resource pool, the connection resource pool comprises at least one connection group, each connection group corresponds to one destination communication apparatus, and the at least one connection group comprises the first connection group.

6. The method according to any one of claims 1 to 5, wherein before the sending, by the first communication apparatus, the first packet to the second communication apparatus based on a first connection group, the method further comprises:
when a data amount of the first packet is greater than a threshold, splitting, by the first communication apparatus, the first packet into a plurality of first sub-packets; and
the sending, by the first communication apparatus, the first packet to the second communication apparatus based on a first connection group comprises:
sending, by the first communication apparatus, the plurality of first sub-packets to the second communication apparatus based on the first connection group.

7. The method according to claim 6, wherein the first communication apparatus comprises an application layer and a transport layer; and the obtaining, by the first communication apparatus, a first packet corresponding to a first service comprises:
receiving, by the transport layer, the first packet that corresponds to the first service and that is sent by the application layer by invoking a logical interface of the first service; and
after the sending, by the first communication apparatus, the plurality of first sub-packets to the second communication apparatus based on the first connection group, the method further comprises:
when the transport layer obtains notification messages respectively corresponding to the plurality of first sub-packets, invoking, by the transport layer, the logical interface of the first service to send a notification message corresponding to the first packet to the application layer.

8. The method according to any one of claims 1 to 7, wherein the first communication apparatus is middleware between application layer software and network adapter hardware.

9. The method according to any one of claims 1 to 8, wherein the first packet is transmitted according to a remote direct memory access RDMA protocol.

10. A data transmission method, wherein the method is applied to a third communication apparatus, and comprises:
receiving, by the third communication apparatus, a first packet that corresponds to a first service and that is sent by a first communication apparatus based on a first connection group, wherein a destination of the first packet is a second communication apparatus, and the first connection group is shared by services transmitted by the first communication apparatus; and
sending, by the third communication apparatus, the first packet to the second communication apparatus.

11. The method according to claim 10, wherein the first connection group comprises a first connection between the first communication apparatus and the second communication apparatus, and the receiving, by the third communication apparatus, a first packet that corresponds to a first service and that is sent by a first communication apparatus based on a first connection group comprises:
receiving, by the third communication apparatus, the first packet that corresponds to the first service and that is sent by the first communication apparatus based on the first connection; and
the method further comprises:
receiving, by the third communication apparatus, a second packet that corresponds to a second service and that is sent by the first communication apparatus based on the first connection, wherein a destination of the second packet is the second communication apparatus; and
sending, by the third communication apparatus, the second packet to the second communication apparatus.

12. The method according to claim 10, wherein the first connection group comprises a first connection and a second connection between the first communication apparatus and the second communication apparatus, and the receiving, by the third communication apparatus, a first packet that corresponds to a first service and that is sent by a first communication apparatus based on a first connection group comprises:
receiving, by the third communication apparatus, the first packet that corresponds to the first service and that is sent by the first communication apparatus based on the first connection; and
the method further comprises:
receiving, by the third communication apparatus, a second packet that corresponds to the first service and that is sent by the first communication apparatus based on the second connection, wherein a destination of the second packet is the second communication apparatus; and
sending, by the third communication apparatus, the second packet to the second communication apparatus.

13. The method according to any one of claims 10 to 12, wherein the first packet comprises a plurality of first sub-packets, and the method further comprises:
when the plurality of first sub-packets are out of order, adding an out-of-order identifier to an out-of-order first sub-packet in the plurality of first sub-packets; and
transmitting the first sub-packet to which the out-of-order identifier is added, wherein the out-of-order identifier indicates that the plurality of first sub-packets are out of order but no packet is lost.

14. The method according to any one of claims 10 to 13, wherein the first packet is transmitted according to a remote direct memory access RDMA protocol.

15. A data transmission method, wherein the method is applied to a second communication apparatus, and comprises:
receiving, by the second communication apparatus, a first packet corresponding to a first service, wherein the first packet is sent by a first communication apparatus based on a first connection group, a destination of the first packet is the second communication apparatus, and the first connection group is shared by services transmitted by the first communication apparatus.

16. The method according to claim 15, wherein the first connection group comprises a first connection between the first communication apparatus and the second communication apparatus, the first packet is sent by the first communication apparatus based on the first connection, and the method further comprises:
receiving, by the second communication apparatus, a second packet corresponding to a second service, wherein the second packet is sent by the first communication apparatus based on the first connection, and a destination of the second packet is the second communication apparatus.

17. The method according to claim 15, wherein the first connection group comprises a first connection and a second connection between the first communication apparatus and the second communication apparatus, the first packet is sent by the first communication apparatus based on the first connection, and the method further comprises:
receiving, by the second communication apparatus, a second packet corresponding to the first service, wherein the second packet is sent by the first communication apparatus based on the second connection, and a destination of the second packet is the second communication apparatus.

18. The method according to any one of claims 15 to 17, wherein the first packet comprises a plurality of first sub-packets, the second communication apparatus comprises an application layer and a transport layer, and the receiving, by the second communication apparatus, a first packet corresponding to a first service comprises:
receiving, by the transport layer, the plurality of first sub-packets, wherein the plurality of first sub-packets respectively comprise corresponding sequence numbers, sub-sequence numbers, and interface identifiers, and the plurality of first sub-packets are obtained by the first communication apparatus by splitting the first packet;
arranging and combining, by the transport layer, the plurality of first sub-packets based on the sequence numbers and the sub-sequence numbers, to obtain the first packet; and
invoking, by the transport layer, a logical interface corresponding to the interface identifier to send the first packet to the application layer.

19. The method according to any one of claims 15 to 18, wherein the first packet comprises the plurality of first sub-packets, and the method further comprises:
when any out-of-order first sub-packet is received, if the any first sub-packet carries an out-of-order identifier, determining, based on the out-of-order identifier, that the plurality of first sub-packets are out of order but no packet is lost.

20. The method according to any one of claims 15 to 19, wherein the second communication apparatus is middleware between application layer software and network adapter hardware.

21. The method according to any one of claims 15 to 20, wherein the first packet is transmitted according to a remote direct memory access RDMA protocol.

22. A data transmission apparatus, wherein the apparatus is used in a first communication apparatus, and the apparatus comprises:
an obtaining module, configured to obtain a first packet corresponding to a first service, wherein a destination of the first packet is a second communication apparatus; and
a sending module, configured to send the first packet to the second communication apparatus based on a first connection group, wherein the first connection group is shared by services transmitted by the first communication apparatus.

23. The apparatus according to claim 22, wherein the first connection group comprises a first connection between the first communication apparatus and the second communication apparatus, and the sending module is configured to send the first packet to the second communication apparatus based on the first connection;
the obtaining module is further configured to obtain a second packet corresponding to a second service, wherein a destination of the second packet is the second communication apparatus; and
the sending module is further configured to send the second packet to the second communication apparatus based on the first connection.

24. The apparatus according to claim 22, wherein the first connection group comprises a first connection between the first communication apparatus and the second communication apparatus, and the sending module is configured to send the first packet to the second communication apparatus based on the first connection;
the obtaining module is further configured to obtain a second packet corresponding to the first service, wherein a destination of the second packet is the second communication apparatus; and
the sending module is further configured to send the second packet to the second communication apparatus based on a second connection.

25. The apparatus according to claim 23 or 24, wherein the sending module is configured to select, based on that connection performance of the first connection meets a performance condition, the first connection to send the first packet to the second communication apparatus, wherein the connection performance comprises at least one of a send queue length, latency performance, or packet loss performance.

26. The apparatus according to any one of claims 22 to 25, wherein the first communication apparatus comprises a connection resource pool, the connection resource pool comprises at least one connection group, each connection group corresponds to one destination communication apparatus, and the at least one connection group comprises the first connection group.

27. The apparatus according to claim 22 to 26, wherein the apparatus further comprises:
a splitting module, configured to: when a data amount of the first packet is greater than a threshold, split, by the first communication apparatus, the first packet into a plurality of first sub-packets; and
the sending module is configured to send the plurality of first sub-packets to the second communication apparatus based on the first connection group.

28. The apparatus according to claim 27, wherein the first communication apparatus comprises an application layer and a transport layer, and the obtaining module is configured to receive, by the transport layer, the first packet that corresponds to the first service and that is sent by the application layer by invoking a logical interface of the first service; and
the sending module is configured to: when the transport layer obtains notification messages respectively corresponding to the plurality of first sub-packets, invoke, by the transport layer, the logical interface of the first service to send a notification message corresponding to the first packet to the application layer.

29. The apparatus according to any one of claims 22 to 28, wherein the first communication apparatus is middleware between application layer software and network adapter hardware.

30. The apparatus according to any one of claims 22 to 29, wherein the first packet is transmitted according to a remote direct memory access RDMA protocol.

31. A data transmission apparatus, wherein the apparatus is used in a third communication apparatus, and the apparatus comprises:
a receiving module, configured to receive a first packet that corresponds to a first service and that is sent by a first communication apparatus based on a first connection group, wherein a destination of the first packet is a second communication apparatus, and the first connection group is shared by services transmitted by the first communication apparatus; and
a sending module, configured to send the first packet to the second communication apparatus.

32. The apparatus according to claim 31, wherein the first connection group comprises a first connection between the first communication apparatus and the second communication apparatus, and the receiving module is configured to receive the first packet that corresponds to the first service and that is sent by the first communication apparatus based on the first connection;
the receiving module is further configured to receive a second packet that corresponds to a second service and that is sent by the first communication apparatus based on the first connection, wherein a destination of the second packet is the second communication apparatus; and
the sending module is further configured to send the second packet to the second communication apparatus.

33. The apparatus according to claim 31, wherein the first connection group comprises a first connection and a second connection between the first communication apparatus and the second communication apparatus, and the receiving module is configured to receive the first packet that corresponds to the first service and that is sent by the first communication apparatus based on the first connection;
the receiving module is further configured to receive a second packet that corresponds to the first service and that is sent by the first communication apparatus based on the second connection, wherein a destination of the second packet is the second communication apparatus; and
the sending module is further configured to send the second packet to the second communication apparatus.

34. The apparatus according to any one of claims 31 to 33, wherein the first packet comprises a plurality of first sub-packets, and the apparatus further comprises: an adding module, configured to: when the plurality of first sub-packets are out of order, add an out-of-order identifier to an out-of-order first sub-packet in the plurality of first sub-packets; and
a transmission module, configured to transmit the first sub-packet to which the out-of-order identifier is added, wherein the out-of-order identifier indicates that the plurality of first sub-packets are out of order but no packet is lost.

35. The apparatus according to any one of claims 31 to 34, wherein the first packet is transmitted according to a remote direct memory access RDMA protocol.

36. A data transmission apparatus, wherein the apparatus is used in a second communication apparatus, and the apparatus comprises:
a receiving module, configured to receive a first packet corresponding to a first service, wherein the first packet is sent by a first communication apparatus based on a first connection group, a destination of the first packet is the second communication apparatus, and the first connection group is shared by services transmitted by the first communication apparatus.

37. The apparatus according to claim 36, wherein the first connection group comprises a first connection between the first communication apparatus and the second communication apparatus, and the first packet is sent by the first communication apparatus based on the first connection; and
the receiving module is further configured to receive a second packet corresponding to a second service, wherein the second packet is sent by the first communication apparatus based on the first connection, and a destination of the second packet is the second communication apparatus.

38. The apparatus according to claim 36, wherein the first connection group comprises a first connection and a second connection between the first communication apparatus and the second communication apparatus, and the first packet is sent by the first communication apparatus based on the first connection; and
the receiving module is further configured to receive a second packet corresponding to the first service, wherein the second packet is sent by the first communication apparatus based on the second connection, and a destination of the second packet is the second communication apparatus.

39. The apparatus according to any one of claims 36 to 38, wherein the first packet comprises a plurality of first sub-packets, and the second communication apparatus comprises an application layer and a transport layer, wherein
the receiving module is configured to: receive, by the transport layer, the plurality of first sub-packets, wherein the plurality of first sub-packets respectively comprise corresponding sequence numbers, sub-sequence numbers, and interface identifiers, and the plurality of first sub-packets are obtained by the first communication apparatus by splitting the first packet; arrange and combine, by the transport layer, the plurality of first sub-packets based on the sequence numbers and the sub-sequence numbers to obtain the first packet; and invoke, by the transport layer, a logical interface corresponding to the interface identifier to send the first packet to the application layer.

40. The apparatus according to any one of claims 36 to 39, wherein the first packet comprises the plurality of first sub-packets, and the apparatus further comprises:
a determining module, configured to: when any out-of-order first sub-packet is received, if the any first sub-packet carries an out-of-order identifier, determine, based on the out-of-order identifier, that the plurality of first sub-packets are out of order but no packet is lost.

41. The apparatus according to any one of claims 36 to 40, wherein the second communication apparatus is middleware between application layer software and network adapter hardware.

42. The apparatus according to any one of claims 36 to 41, wherein the first packet is transmitted according to a remote direct memory access RDMA protocol.

43. A data transmission device, wherein the data transmission device comprises a processor, wherein the processor is coupled to a memory, the memory stores at least one program instruction or code, and the at least one program instruction or code is loaded and executed by the processor, to enable the data transmission device to implement the data transmission method according to any one of claims 1 to 21.

44. A data transmission system, wherein the data transmission system comprises a first communication apparatus and a second communication apparatus, wherein
the first communication apparatus is configured to perform the data transmission method according to any one of claims 1 to 9, and the second communication apparatus is configured to perform the data transmission method according to any one of claims 15 to 21.

45. The system according to claim 44, wherein the system further comprises a third communication apparatus, wherein
the third communication apparatus is configured to perform the data transmission method according to any one of claims 10 to 14.

46. A computer-readable storage medium, wherein the computer storage medium stores at least one instruction, and the at least one instruction is loaded and executed by a processor, to enable a computer to implement the data transmission method according to any one of claims 1 to 21.

47. A computer program product, wherein the computer program product comprises computer program code, and when the computer program code is loaded and executed by a computer, the computer is enabled to perform the data transmission method according to any one of claims 1 to 21.
